# EUROPEAN PATENT APPLICATION

(11) **EP 4 726 277 A1**
(43) Date of publication of application: **15.04.2026**
(21) Application number: 25208480.1
(22) Date of filing: 14.10.2025
(51) Int. Cl.: F24F 12/00, F04D 29/42, F04D 29/44

(54) **A VENTILATION UNIT FOR A RESIDENTIAL BUILDING**

(30) Priority: 14.10.2024 BE 202405679
(71) Applicant: Renson, 8790 Waregem (BE)
(72) Inventor: VAN OVERBEKE, Maarten Jonas Pol, 8570 Ingooigem (BE); TIERSEN, Jonas Jürgen, 8940 Geluwe (BE); PLATTEEUW, Pieterjan, 8830 Gits (BE)
(74) Representative: Gevers Patents

(57) **Abstract**

A ventilation unit (10) for a residential building. The ventilation unit comprises: a housing (12) through which two flow paths (32, 34) extend; at least one air-to-air plate heat exchanger (44); and a drive unit (36, 38) in each flow path. The drive unit may be provided with shafts on the volute housing on which rotatable handles are provided for easy installation. The drive unit may have a compact volute housing of which the height/width ratio of the flow area has a local maximum opposite the mouth of the volute housing. The drive unit may comprise a backward curved centrifugal fan, wherein the mouth of the volute housing is shifted inwards to improve the air flow.

## Description

### Technical field

The present invention relates to a ventilation unit for a residential building. The present invention also relates to a residential dwelling comprising the ventilation unit. The present invention also relates to a method for installing a drive unit in a ventilation unit for a residential building.

### Background art

A mechanical ventilation system for balanced ventilation with heat recovery (Mechanical Ventilation with Heat Recovery - MVHR) is known. In general, there are two types of systems: those based on a Heat Recovery Ventilation (HRV) module and those based on an Energy Recovery Ventilation (ERV) module. An HRV unit exchanges sensible heat between two air flows. In this way, it is possible to heat the incoming air flow in winter and cool it in summer. An ERV unit exchanges energy between two air flows and can transfer both sensible heat and latent heat. In this way, it is possible to heat and/or humidify the incoming air flow in winter and to cool and/or dehumidify it in summer.

Such a mechanical ventilation system generally comprises a central ventilation unit that is connected via various ducts to different spaces inside the residential building. An example of such a mechanical ventilation system is disclosed in WO 2023/227961 A1. The ventilation unit disclosed therein comprises: a housing in which a first inlet, a second inlet, a first outlet, and a second outlet are provided, wherein the first inlet and the first outlet together form part of a first flow path and wherein the second inlet and the second outlet together form part of a second flow path; an air-to-air plate heat exchanger positioned inside the housing and provided with a plurality of first channels that form part of the first flow path and a plurality of second channels that form part of the second flow path; a first drive unit positioned inside the housing and arranged for driving an air flow over the first flow path and a second drive unit positioned inside the housing and arranged for driving an air flow over the second flow path; and a fastening mechanism for fastening a volute housing to the housing.

The ventilation unit disclosed in WO 2023/227961 A1 may comprise a drive unit formed by a backward curved centrifugal fan inside a volute housing (also known as a scroll housing). The centrifugal fan determines an axis of rotation and a hypothetical smallest circumscribed cylinder. The disclosed volute housing is provided with: a mouth defining an outflow direction that is perpendicular to the axis of rotation, which mouth has a peripheral wall; an end part that connects to the mouth; a narrowest part; a circumferential part that extends around the axis of rotation from the narrowest part of the volute housing over an angle of at least 250° to the end part of the volute housing; an axial suction opening around which the narrowest part, the circumferential part and the end part extend; a top wall in which the axial suction opening is formed; and a bottom wall located opposite the top wall when viewed in an axial direction parallel to the axis of rotation. The volute housing determines a flow area that varies along the circumferential part, which flow area, in a cross-section containing the axis of rotation, is delimited by the hypothetical smallest circumscribed cylinder and the inner wall of the circumferential part, wherein a width of the flow area, in a cross-section containing the axis of rotation, is determined by a longest distance perpendicular to the axis of rotation between the hypothetical smallest circumscribed cylinder and the inner wall of the circumferential part, and wherein a height of the flow area, in a cross-section containing the axis of rotation, is determined by a longest distance parallel to the axis of rotation between two locations on the inner wall of the circumferential part.

In the context of a central ventilation unit, various technical requirements exist. It is desirable for the housing to be as compact as possible so that the unit takes up as little space as possible. It is desirable for a large flow rate to be able to flow over each flow path in order to exchange heat and/or energy as efficiently as possible. It is desirable for the unit to be as quiet as possible, since it is typically installed inside the residence. It is also desirable for components inside the housing to be easily replaceable, for example in case of malfunctions.

### Description of the invention

It is an object of the present invention to provide a ventilation system for a residential building of which the ventilation unit at least partially meets at least one of the technical requirements described above.

In a first aspect, the present invention relates to a ventilation unit for a residential building, said ventilation unit comprising: a housing in which a first inlet, a second inlet, a first outlet, and a second outlet are provided, wherein the first inlet and the first outlet together form part of a first flow path and wherein the second inlet and the second outlet together form part of a second flow path; an air-to-air plate heat exchanger positioned inside the housing and provided with a plurality of first channels that form part of the first flow path and a plurality of second channels that form part of the second flow path; a first drive unit positioned inside the housing and arranged for driving an air flow over the first flow path and a second drive unit positioned inside the housing and arranged for driving an air flow over the second flow path, wherein each drive unit comprises a centrifugal fan inside a volute housing, which volute housing has a mouth with a peripheral wall; and a fastening mechanism for fastening a volute housing to the housing, wherein the fastening mechanism comprises: a first shaft and a second shaft that are each provided on an outside of the volute housing, wherein the shafts are in line with each other on either side of the volute housing and together define an axis of rotation; a first handle provided on the first shaft and a second handle provided on the second shaft, wherein each handle is rotatable around said axis of rotation between a free position and a mounted position; a first handle guide on an inside of the housing which the first handle contacts and a second handle guide on an inside of the housing which the second handle contacts, wherein each handle guide is provided with a locking element in which the handle corresponding to the handle guide engages in the mounted position; and a mounting slot in the housing in communication with the inlet or the outlet of the flow path of the respective drive unit, wherein the design of the mounting slot corresponds to the peripheral wall of the mouth, wherein, when the mounting handles are in their mounted position, the mouth is located at least partially in the mounting slot and wherein, when the mounting handles are in their free position, the mouth is adjacent to the mounting slot.

In the prior art, for example as disclosed in KR 2024 0115527 Ad, each drive unit is typically fastened to the housing by conventional fastening means, such as screws, bolts, etc. The housing is typically manufactured from expanded polypropylene (EPP) or other insulating materials, such as expanded polystyrene (EPS). As part of the present invention, the inventors realized that such conventional fastening means are disadvantageous with an EPP or EPS housing.

Firstly, these fastening means provide a direct connection between the drive unit and the housing. Any vibration resulting from the operation of the drive unit is therefore transmitted to the housing. This may cause noise.

Secondly, the housing is damaged by the application of the fastening means. This is particularly disadvantageous in the context of replacing a drive unit, as a result of which the fastening means may no longer engage properly in the housing.

The fastening mechanism according to the first aspect at least partially remedies these problems. Specifically, by using shafts with rotatable handles, there is no longer a need for conventional fastening means. More specifically, each handle is movable with respect to the shaft (i.e. with respect to the volute housing) between a free position and a mounted position. The handle guides inside the housing ensure that a rotation of the handles results in a displacement of the volute housing so that the mouth fits into the mounting slot. In this way, the fastening of the drive unit to the housing is formed by the mouth fitting into the mounting slot in combination with the handles and corresponding handle guides in which the handles are locked.

In this first aspect, the invention also relates to a method for installing a drive unit in a ventilation unit for a residential building, wherein the method comprises: a) providing a ventilation unit and a drive unit, said ventilation unit comprising: a housing in which a first inlet, a second inlet, a first outlet, and a second outlet are provided, wherein the first inlet and the first outlet together form part of a first flow path and wherein the second inlet and the second outlet together form part of a second flow path; and an air-to-air plate heat exchanger positioned inside the housing and provided with a plurality of first channels that form part of the first flow path and a plurality of second channels that form part of the second flow path, which drive unit is arranged for driving an air flow over one of said flow paths and comprises a backward curved centrifugal fan inside a volute housing, which volute housing is provided on its outside with a first shaft and a second shaft that are in line with each other on either side of the volute housing and together define an axis of rotation, wherein on each shaft a handle is provided that is rotatable around said axis of rotation between a free position and a mounted position; b) placing the drive unit in the housing with the handles in the free position so that each handle rests on a corresponding handle guide on an inside of the housing; c) rotating the handles from their free position to their mounted position. Preferably, step b) comprises tilting the volute housing with respect to the housing. Preferably, step c) comprises shifting the volute housing with respect to the housing so that a mouth of the volute housing fits into a mounting slot in the housing corresponding to the mouth.

As already described, by using shafts with rotatable handles, there is no longer a need for conventional fastening means.

Tilting during step b) allows the housing to be made more compact compared to a design where the tilting is not present. In such a situation, there must be space to slide the drive unit into its final orientation in the housing and then to realize the displacement by means of the handles.

Shifting during step c) maximizes the displacement of the drive unit with respect to the housing compared to other types of displacement. This allows the mouth to be displaced sufficiently to fit properly into the mounting slot.

In a second aspect, the present invention relates to a ventilation unit for a residential building, said ventilation unit comprising: a housing in which a first inlet, a second inlet, a first outlet, and a second outlet are provided, wherein the first inlet and the first outlet together form part of a first flow path and wherein the second inlet and the second outlet together form part of a second flow path; an air-to-air plate heat exchanger positioned inside the housing and provided with a plurality of first channels that form part of the first flow path and a plurality of second channels that form part of the second flow path; and a first drive unit positioned inside the housing and arranged for driving an air flow over the first flow path and a second drive unit positioned inside the housing and arranged for driving an air flow over the second flow path, wherein each drive unit comprises a backward curved centrifugal fan inside a volute housing, wherein each centrifugal fan has an axis of rotation and a hypothetical smallest circumscribed cylinder and wherein each volute housing is provided with: a mouth defining an outflow direction that is perpendicular to the axis of rotation; an end part that connects to the mouth; a narrowest part; and a circumferential part that extends around the axis of rotation from the narrowest part of the volute housing over an angle of at least 250° to the end part of the volute housing, wherein each volute housing defines a flow area that varies along the circumferential part, which flow area, in a cross-section containing the axis of rotation, is delimited by the hypothetical smallest circumscribed cylinder and the inner wall of the circumferential part, wherein a width of the flow area, in a cross-section containing the axis of rotation, is determined by a longest distance perpendicular to the axis of rotation between the hypothetical smallest circumscribed cylinder and the inner wall of the circumferential part, wherein a height of the flow area, in a cross-section containing the axis of rotation, is determined by a longest distance parallel to the axis of rotation between two locations on the inner wall of the circumferential part, wherein a surface area of the flow area increases monotonically from the narrowest part up to the end part over the circumferential part and wherein a ratio of the height of the flow area to the width of the flow area has a local maximum in an angular region that extends between 45° and 135° relative to the transition between the end part and the circumferential part.

Monotonically increasing the flow area typically has a positive effect on the flow rate and/or on noise reduction. This is known, for example, from US 2018/0135653 A1, where the height of the volute housing increases in the circumferential part to thus obtain a larger surface area of the flow area.

In this aspect of the invention, the flow area has a variable height-width ratio. More specifically, there is a local maximum thereof in the zone of the volute housing opposite the mouth. Such a local maximum means that either the width decreases or the height increases, or possibly a combination of both. However, this local maximum does not detract from the monotonic increase of the total surface area. The present inventors have determined through numerical simulation that such a local maximum has no significant adverse effect on the flow rate at the mouth.

The advantage of the local maximum is that the width of the volute housing is reduced compared to a volute housing in which such a local maximum is not present. Because the local maximum is located opposite the mouth (i.e. in the angular region that extends between 45° and 135° relative to the transition between the end part and the circumferential part), the drive unit thus becomes smaller in the width dimension. This therefore results in a more compact housing. A space saving of up to 2% of the maximum diameter of the volute housing is possible. This can amount to space savings of up to 3 cm.

Moreover, the extra space needed for the local increase in height typically has no adverse effect on the compactness of the housing. This is because space is available near the air-to-air plate heat exchanger.

In a third aspect, the present invention relates to a ventilation unit for a residential building, said ventilation unit comprising: a housing in which a first inlet, a second inlet, a first outlet, and a second outlet are provided, wherein the first inlet and the first outlet together form part of a first flow path and wherein the second inlet and the second outlet together form part of a second flow path; an air-to-air plate heat exchanger positioned inside the housing and provided with a plurality of first channels that form part of the first flow path and a plurality of second channels that form part of the second flow path; and a first drive unit positioned inside the housing and arranged for driving an air flow over the first flow path and a second drive unit positioned inside the housing and arranged for driving an air flow over the second flow path, wherein each drive unit comprises a backward curved centrifugal fan inside a volute housing, wherein each centrifugal fan has an axis of rotation and a hypothetical smallest circumscribed cylinder and wherein each volute housing is provided with: a mouth defining an outflow direction that is perpendicular to the axis of rotation; an end part that connects to the mouth; a narrowest part; a circumferential part that extends around the axis of rotation from the narrowest part of the volute housing over an angle of at least 250° to the end part of the volute housing; an axial suction opening around which the narrowest part, the circumferential part and the end part extend; a top wall in which the axial suction opening is formed; and a bottom wall located opposite the top wall when viewed in an axial direction parallel to the axis of rotation, wherein the mouth, in a hypothetical plane perpendicular to the outflow direction, has a substantially rectangular cross-section and a projection according to the outflow direction of said hypothetical smallest circumscribed cylinder onto said hypothetical plane has an overlap with the substantially rectangular cross-section.

Usually, the mouth of the volute housing is located next to the centrifugal fan. This is disclosed, for example, in US 2019/0186498 A1 and US 2021/0108954 A1. In each case, the inner part of the mouth is tangential to the centrifugal fan and a narrowest zone (or narrowest part) is formed there. The present inventors have determined through numerical simulation that with the use of a backward curved centrifugal fan, such a mouth is not efficient. This is because it gives rise to an accumulation of the air flow in the narrowest part (thus creating a local pressure increase) as well as a dead zone (i.e. a zone with little to no flow) just past the narrowest part.

From this observation, the present aspect of the invention arose. Namely, shifting the mouth inwards (i.e. shifting it towards the axis of rotation of the centrifugal fan) so that an overlap is created in a projection onto the same hypothetical plane. In conjunction with this, the cross-section was changed from circular to rectangular. It has been determined numerically that this greatly reduces or even completely eliminates the accumulation and dead zone. This results in a smoother flow (e.g. a laminar flow with no or little turbulence) and thus an increased flow rate.

An embodiment is characterized in that a seal is provided on the peripheral wall of the mouth, which seal, in the mounted position of the mounting handles, provides a nearly airtight connection between the mouth and the mounting slot. This avoids unnecessary pressure loss across the ventilation unit, which pressure loss can have an adverse effect on the flow rate.

The seal also has a damping effect. More specifically, the seal dampens the vibrations generated by the drive unit. This also has a positive influence in that noise is dampened.

An embodiment is characterized in that the mouth has a substantially rectangular cross-section. This increases the surface area of the mouth compared to a circular cross-section whose radius is equal to the smallest dimension of the rectangular cross-section. This increased surface area thus also increases the outbound flow area, which typically has a positive effect on the flow rate, as well as on a more linear and/or laminar flow and a reduction in turbulence.

An embodiment is characterized in that the shafts are provided on the volute housing on the side opposite the mouth. In this way, the volute housing is anchored in the housing on both sides, namely at the mouth and at the shafts. This increases the stability of the fastening mechanism. It also increases the accessibility of the handles when the drive unit is placed in the housing. They are now located at the free end of the drive unit, which can be placed, for example, near a wall of the housing.

An embodiment is characterized in that said axis of rotation defined by the shafts is substantially perpendicular to an axis of rotation of the centrifugal fan and is substantially perpendicular to an outflow direction defined by the mouth, wherein the outflow direction is preferably perpendicular to the axis of rotation of the centrifugal fan. Such perpendicular shafts simplify the design of the ventilation unit. It could lead to a difficult design if the axis of rotation of the shafts were not perpendicular to the axis of rotation of the centrifugal fan, as this would give rise to inclined shafts, inclined handles and thus inclined handle guides.

An embodiment is characterized in that each handle has a non-rotationally symmetrical shape with respect to the shaft on which it is mounted so that a rotation of the handle results in a shifting of the drive unit. The conversion of a rotation into a translation is mechanically simpler than other conversions. Moreover, by using a non-rotationally symmetrical handle, the shifting can be adjusted by the design of the handle without having to make adjustments to the handle guides in the housing.

An embodiment is characterized in that each handle guide has a smooth concave sliding surface with which the corresponding handle makes contact, wherein, preferably, the locking element is at least partially formed by a groove in the sliding surface and a ridge on the handle corresponding to the groove. A smooth concave surface simplifies the sliding of the handle compared to a non-smooth surface. It also maximizes the contact area between the handle guide and the handle compared to a non-smooth surface. The use of a concave surface is also a simple way to realize the conversion from rotation to shifting. A groove and a matching ridge also form a clear indication for an installer that the handles have been sufficiently rotated so that the drive unit is in the correct and desired position relative to the housing.

An embodiment is characterized in that a damping ring is fitted between each shaft and the handle. This damping ring dampens the vibrations generated by the drive unit. This has a positive influence in that noise is dampened. Combined with the seal around the mouth, each connection between the drive unit and the housing is thus provided with a (sound) damping means.

An embodiment is characterized in that the damping ring is provided with a first and a second cavity in its outer wall and that the handle is provided with a resilient arm, wherein the arm engages in the first cavity if the handle is in its free position and wherein the arm engages in the second cavity if the handle is in its mounted position. The cavities in combination with the resilient arm ensure that the handle is bistable with respect to the shaft so that there are only two positions in which the handle remains stable. There is thus a reduced risk that the handle would be in an incorrect rotational position. The resilient arm can be resilient due to its shape and/or choice of material.

An embodiment is characterized in that the damping ring has a non-circular inner wall and that the shaft has a corresponding non-circular outer wall. This contributes to the correct positioning of the damping ring on the shaft. More specifically, depending on the non-circular shape, only one or at most two positions are possible. It is also advantageous to make the damping ring mirror-symmetrical with respect to its central plane with the axis of rotation as its normal. This allows one design of damping ring to be used for both shafts.

An embodiment is characterized in that the volute housing comprises a first shell and a second shell, wherein each shaft comprises a first shaft part that is integrally formed with the first shell and a second shaft part that is integrally formed with the second shell. The volute housing of a drive unit is typically formed from two separate shells. This is advantageous from a production point of view because each shell can be formed by injection molding. It is also advantageous for the assembly of the drive unit since the centrifugal fan could not be (easily) inserted into an integrally and inseparably formed volute housing. Forming the shaft parts integrally with the shells avoids the need for separate elements that would then have to be fastened in turn.

An embodiment is characterized in that each handle is bistable with the mounted position and the free position as stable positions. As already described, this reduces the risk that the handle would be in an incorrect rotational position.

An embodiment is characterized in that the first drive unit is located behind the air-to-air plate heat exchanger on the first flow path and that the second drive unit is located behind the air-to-air plate heat exchanger on the second flow path. Although the drive units can also be located in front of the plate heat exchanger on their flow path, it is advantageous for the air flow to place them after it so that air is drawn through the plate heat exchanger instead of being blown through it.

An embodiment is characterized in that the value of said local maximum is at most 0.75 (or preferably at most 0.6 or 0.5 or 0.4 or 0.35) higher than an average of the ratio of the height of the flow area to the width of the flow area over the entire circumferential part. If the local maximum deviates too much from the average value, this means a strongly deviating design that typically gives rise to undesirable flow effects. For example, in the case of a greatly increased height, there is a separation of the flow from the wall of the volute housing, thus creating a dead zone.

An embodiment is characterized in that the ratio of the height of the flow area to the width of the flow area over the entire circumferential part globally decreases from the narrowest part to the end part. This can be achieved, for example, by allowing the width of the volute housing to increase globally. This is also a typical construction of the volute housing, which often has a logarithmic spiral shape and thus has a constant height and increasing width.

An embodiment is characterized in that the width of the flow area in a portion of said angular region is substantially constant, wherein said portion extends over an angle of at least 30°, wherein, preferably, said portion extends over an angle of between 80° and 135° relative to the transition between the end part and the circumferential part. By keeping the width constant over a larger angle, there is a reduction in the total width of the volute housing, which is advantageous as already described. This constant width portion is preferably located opposite the mouth in order to make optimal use of the space saving.

An embodiment is characterized in that the height of the flow area has an absolute maximum in said angular region, which absolute maximum is preferably in a portion that extends over an angle of between 60° and 120° relative to the transition between the end part and the circumferential part. Typically, the height of a volute housing is substantially constant. However, in the context of the invention, it is advantageous to provide an absolute maximum of the height in order to realize the local maximum of the height/width ratio.

An embodiment is characterized in that the width of the flow area increases monotonically from the narrowest part up to the end part over the circumferential part. This is in line with making the width evolution of the volute housing follow the known logarithmic spiral shape as closely as possible. Note that a monotonic increase allows certain areas to remain constant.

An embodiment is characterized in that the mouth has a substantially rectangular cross-section, wherein the substantially rectangular cross-section has a height, wherein the height of the flow area has an absolute maximum in the circumferential part, wherein the absolute maximum is greater than the height of the substantially rectangular cross-section. Typically, the height of a volute housing is substantially constant and thus relatively the same as the height of the mouth. However, in the context of the invention, it is advantageous to provide an absolute maximum of the height in order to realize the local maximum of the height/width ratio.

An embodiment is characterized in that said local maximum is formed by a bulge on the circumferential part, which bulge is directed towards the air-to-air plate heat exchanger. Although the bulge could be formed symmetrically with respect to a central plane on the volute housing, it is advantageous to make it asymmetrical. This is because space is typically available towards the air-to-air plate heat exchanger, whereas a symmetrical bulge would require a larger housing.

An embodiment is characterized in that the air-to-air plate heat exchanger has a substantially honeycomb-like shape. Such a honeycomb is a known design for an air-to-air plate heat exchanger. It is extremely advantageous in the present invention because there is space at its top or bottom side for the volute housing of a drive unit (in particular the extra height resulting from the local maximum).

An embodiment is characterized in that a pressure sensor and/or a temperature sensor is provided on the circumferential part of the volute housing, in particular on the outside thereof, in an angular region that extends between 0° and 60° relative to the transition between the narrowest part and the circumferential part. These sensors allow the pressure and/or temperature of the air flow to be measured. Their placement is near the inlet side of the volute housing so that the influence of the sensors on the air flow is as small as possible.

An embodiment is characterized in that the volute housing is provided with an axial suction opening around which the narrowest part, the circumferential part and the end part extend, wherein, preferably, a flow guide is provided in the suction opening. The axial suction opening is a standard element of the volute housing for use with a backward curved centrifugal fan. Flow guides fitted in the suction opening are known, e.g. from WO 2015/124237 A1 and EP 3 287 642 A1, and can optimize the incoming air flow.

An embodiment is characterized in that the surface area of the flow area increases strictly monotonically from the narrowest part up to the end part over the circumferential part. The strict increase avoids a temporary stagnation of the surface area increase, which stagnation could have a negative effect on the flow rate.

An embodiment is characterized in that the surface area of the flow area further increases over the end part, wherein the surface area reaches an absolute maximum at the mouth. This increased surface area thus also increases the outbound flow area, which typically has a positive effect on the flow rate, such as a reduction in turbulence, a more laminar flow, a more linear flow without curvature, etc.

An embodiment is characterized in that a normal to a cross-section containing the axis of rotation, at the boundary where the circumferential part transitions into the end part, coincides with the outflow direction. This ensures a unique determination of the transition between the end part and the circumferential part.

An embodiment is characterized in that the overlap has a surface area that amounts to at least 15%, preferably at least 20% and more preferably at least 25%, of a surface area of said projection. In addition, the surface area of the overlap is preferably at most 50% and more preferably at most 40% of the surface area of said projection. The surface area of said projection is directly proportional to the outer diameter of the centrifugal fan. The surface area of overlap is an indication of how much the mouth has been shifted towards the centrifugal fan in a plane perpendicular to the outflow direction. The higher the surface area of the overlapping region, the more the mouth has been shifted towards the centrifugal fan. However, the mouth should not be shifted too far inwards either. This is because it would result in the narrowest part also being shifted further. Thus, there would be a smaller angle over which the air flow circulates around the centrifugal fan in the volute housing. This can adversely affect the flow rate.

An embodiment is characterized in that the end part comprises an axially raised part that extends from the top wall to the bottom wall, wherein a cross-section through the axially raised part in a plane perpendicular to the axis of rotation is substantially wedge-shaped, wherein a tip of the wedge is directed away from the mouth and is curved towards the centrifugal fan. A backward curved centrifugal fan normally has blades that do not extend all the way to the top wall and/or bottom wall of the volute housing, in contrast to a forward curved centrifugal fan where this is often the case. There is therefore, typically at the top wall, a fairly large distance between that wall and the fan blades. This is all the more the case because the suction opening is also located in the top wall, which opening is typically demarcated by an inwardly curved edge. This axially raised part serves as an air guide for the air flow near the top wall around the suction opening and serves to deflect the air flow in that portion towards the mouth. The curvature of its tip towards the centrifugal fan contributes to deflecting as large a portion of the air flow as possible. There is thus no overlap between the fan blades and the axially raised part in the axial direction.

An embodiment is characterized in that the axially raised part has a wall facing the centrifugal fan that is substantially parallel to the hypothetical smallest circumscribed cylinder. The inner wall of the axial air guide is thus always tangential to the air flow on its inner side. This is so as to influence the flow of the non-deflected air as little as possible. In addition, the distance between the centrifugal fan and the inner wall of the axial air guide can be made sufficiently small in this way.

An embodiment is characterized in that the axially raised part extends over at least 80% and preferably at least 90% of a length of the end part, which length is defined as a greatest distance of the end part according to the outflow direction, wherein, preferably, the axially raised part extends from the connection between the end part and the mouth. The more the axial air guide penetrates into the volute housing (i.e. the greater the length), the earlier in the flow direction the flow is split and deflected, and thus the greater the effect. However, the axial air guide should preferably not extend into the circumferential part so as not to disturb the acceleration of the air flow.

An embodiment is characterized in that the centrifugal fan comprises: a lower annular wall part near the bottom wall of the volute housing; an upper annular wall part near the top wall of the volute housing; and a plurality of fan blades located between the lower and upper annular wall parts, wherein the axially raised part extends in the axial direction along at least a portion of the upper annular wall part and preferably up to the vicinity of the plurality of fan blades. As already described, the axial air guide serves to deflect the air flow near the top wall around the suction opening. It is therefore advantageous that this axial air guide is sufficiently high to bridge the distance between the top wall and the centrifugal fan and preferably even up to the vicinity of the blades of the centrifugal fan.

An embodiment is characterized in that the axially raised part has side walls that are substantially parallel to the axial direction. These walls have a slight slope for production-technical reasons, namely to be able to remove the shell of the volute housing from the mold in an injection molding process. However, this slope is preferably as small as possible in order to avoid or minimize an unnecessary restriction of the surface area of the flow area.

An embodiment is characterized in that the tip of the wedge of the axially raised part has a radius of curvature that is less than 8 mm, preferably less than 6 mm, more preferably less than 5 mm and even more preferably less than 4 mm, for example 3 mm. The tip of the wedge is preferably as sharp as possible, i.e. has the lowest possible radius of curvature. This is because a sharp angle is better for separating the air flow and thus deflecting it towards the mouth. However, there are production-technical limits on the minimum radius of curvature.

An embodiment is characterized in that the narrowest part is formed by a constriction of the volute housing, wherein the constriction has a tip that is bent away from the mouth towards the axis of rotation. The narrowest part of the volute housing plays a crucial role as it determines the boundary of the air flow to check which portion flows to the mouth and which portion flows around the centrifugal fan at least once more.

Typically, this is formed by a blunt convex bulge as in US 2019/0186498 A1 and EP3 287 642 A1 that extends partially into the mouth. The present inventors have determined through numerical simulation that such a bulge is detrimental to the air flow and acoustics. More specifically, an accumulation occurs on the bulge and a dead zone is formed after the bulge, both of which give rise to a turbulent air flow. This is detrimental to the flow rate and also results in unnecessary development of noise.

From this observation, this embodiment of the invention arose. Namely, bending a tip of the constriction inwards so that the constriction (which determines the narrowest part) is no longer located in the mouth and/or the end part. It has been determined numerically that this has greatly reduced or even completely eliminated the accumulation and the dead zone. This results in a smoother flow with an increased flow rate and with a reduced development of noise.

An embodiment is characterized in that a cross-section through the constriction in a plane perpendicular to the axis of rotation forms a sharp angle. The constriction is preferably as sharp as possible so that the constriction serves efficiently as an air separator with as little accumulation of the flow as possible.

An embodiment is characterized in that the tip of the constriction has a radius of curvature that is less than 8 mm, preferably less than 6 mm and more preferably less than 5 mm. The tip of the constriction can vary over the height of the constriction. It is therefore preferred that the smallest radius of curvature is lower than 4 mm, for example 3 mm. The tip of the constriction is preferably as sharp as possible, i.e. has the lowest possible radius of curvature. A sharp angle is better for separating the air flow and thus deflecting it towards the mouth. However, there are production-technical limits on the minimum radius of curvature.

An embodiment is characterized in that a projection according to the outflow direction of the tip of the constriction onto a hypothetical plane perpendicular to the outflow direction and through the axis of rotation is at a smallest distance from the axis of rotation, which smallest distance is between 20% and 55% of a radius of said hypothetical smallest circumscribed cylinder. In particular, the lower limit is at least 25% or at least 30%. In particular, the upper limit is at most 45% or at most 40%. Through such a placement, the largest part of the air flow around the centrifugal fan is deflected towards the mouth.

An embodiment is characterized in that an inner wall of the circumferential part adjacent to the narrowest part forms a smallest angle with respect to a hypothetical plane perpendicular to the outflow direction, which angle is between 35° and 60°. In particular, the lower limit is at least 38° or at least 41°. In particular, the upper limit is at most 55° or at most 50°. The angle is for example 44°. Numerical simulations showed that an angle that was too small (i.e. lower than 35°) did not work, due to, among other things, too much guidance of the air flow back around the centrifugal fan. Whereas an angle that was too large gave rise to adverse acoustic effects.

An embodiment is characterized in that the centrifugal fan comprises: a lower annular wall part near the bottom wall of the volute housing; an upper annular wall part near the top wall of the volute housing; and a plurality of fan blades located between the lower and upper annular wall parts, wherein the constriction extends in the axial direction along the plurality of fan blades and preferably at least partially overlaps with the lower and upper annular wall parts. As already described, the constriction serves as a flow guide for splitting the flow. It is therefore advantageous that this constriction extends over the entire height of the centrifugal fan blades in order to split the flow as much as possible. An overlap with the annular parts of the centrifugal fan further enhances this effect because the constriction is then present over virtually the entire height of the flow area.

An embodiment is characterized in that a cross-section through the constriction with the axis of rotation of the centrifugal fan as the normal direction is substantially uniform along the axial direction. In other words, the constriction is substantially uniform in the axial direction and therefore varies little. There is a slight slope for production-technical reasons as already described above.

An embodiment is characterized in that the suction opening is delimited by a peripheral wall of the volute housing, which peripheral wall is curved towards the centrifugal fan. Such a curved edge is advantageous for two reasons. Firstly, the smooth curve provides a smoother air flow compared to a flat edge. Secondly, the curved edge allows an annular part of the centrifugal fan to be placed radially outside it, which partially overlaps in the axial direction. This reduces the risk of sucked-in air entering the volute housing via an undesired flow path.

An embodiment is characterized in that the centrifugal fan is fastened on the bottom wall of the volute housing. This is the usual construction of a known drive unit.

An embodiment is characterized in that the centrifugal fan is a backward curved centrifugal fan. It is known that such centrifugal fans are very efficient and can thus deliver sufficient flow rate with the lowest possible energy consumption.

An embodiment is characterized in that the air-to-air plate heat exchanger operates on the basis of a cross-flow. This forms a simple and efficient design.

An embodiment is characterized in that the air-to-air plate heat exchanger is a heat recovery ventilation unit (HRV unit).

An embodiment is characterized in that the air-to-air plate heat exchanger is an energy recovery ventilation unit (ERV unit).

The choice of an HRV or ERV unit provides a degree of flexibility and allows the ventilation unit to be optimized for the application. The climate in which the residential building is located is an important parameter for the choice between an HRV or ERV unit. For example, an ERV unit is more suitable for a hot and/or humid climate, while an HRV unit is more suitable for a cold climate.

An embodiment is characterized in that the first inlet is configured to supply outside air to the ventilation unit, the second inlet is configured to supply inside air to the ventilation unit, the first outlet is configured to discharge air from the ventilation unit to an indoor space and the second outlet is configured to discharge air from the ventilation unit to an outdoor space.

An embodiment is characterized in that the ventilation unit is configured to be mounted on a wall of the building, in particular in a vertical position.

An embodiment is characterized in that the housing is rotationally symmetrical with respect to a rotation of 180° around an axis that is parallel to the outflow direction of the drive unit. Such an embodiment has the advantage that it is not necessary to provide two different mirrored versions of the heat exchanger (i.e. the left/right versions), but that the same heat exchanger, due to this symmetry, can be used regardless of the arrangement of the pipes already installed in a building. This simplifies installation and also reduces production costs.

It should be clear that, despite the presence of symmetry as described above, there may be components that are not arranged symmetrically with respect to the symmetry. However, this has no adverse effect on the installation, since the placement of such components is not affected by the placement of the pipes already installed in the building.

An embodiment is characterized in that each inlet and/or each outlet is formed by two openings in adjacent walls of the housing that internally connect to the same space. Providing two inlet openings and/or outlet openings in adjacent walls allows pipes to be connected to the ventilation unit from mutually perpendicular directions. An advantage of this is that, for example, pipes from different indoor spaces can be directly connected to the inlet or outlet of the ventilation unit without a coupling piece. Typically, especially in smaller residential buildings, only one of the two openings will be used.

An embodiment is characterized in that a filter unit is present on at least one flow path. The filter unit is configured to filter particles, such as sand, insects, hair, coarse dust, etc. out of an air flow. Preferably, the filter unit is configured to additionally filter smaller particles, such as pollen or fine dust, out of an air flow. In an embodiment, the filter unit comprises, or each filter is, an ISO coarse filter according to the ISO 16890 standard. In another embodiment, the filter unit comprises, or each filter is, an ISO ePM10 filter according to the ISO 16890 standard. In yet another embodiment, the filter unit comprises, or each filter is, an ISO ePM2.5 filter or an ISO ePM1 filter according to the ISO 16890 standard, although this may lead to a reduced air flow. Typical materials used in a filter unit are polyester (PES) and/or polypropylene (PP).

In a fourth aspect, the present invention further relates to a residential dwelling comprising the ventilation unit as described above.

In a fifth aspect, the present invention further relates to the use of the ventilation unit as described above for a residential mechanical ventilation with heat recovery (MVHR) application, in particular for regulating heat and/or humidity in an indoor space of a building.

It should be clear that, as will also become apparent from the further description below, the aspects of the invention identified above and the various embodiments (including optional features that may be indicated) are not separate elements, but, on the contrary, that these various elements can be combined with each other to obtain still other embodiments than those already described, which embodiments also form part of the present invention.

### Brief description of the drawings

The invention will be explained in further detail below with reference to the following description and the accompanying drawings.
Figure 1 shows a perspective view of a ventilation unit according to the present invention.
Figure 2 shows a cross-section through the ventilation unit of figure 1.
Figures 3A and 3B show a perspective view of the top side and bottom side, respectively, of a drive unit used in the ventilation unit of figure 1.
Figures 4A through 4C show a cross-section through a ventilation unit according to the present invention during installation of the drive unit.
Figures 5A and 5B show details relating to the mounting handle of the drive unit in the mounted position.
Figures 6A and 6B show details relating to the mounting handle of the drive unit in the free position.
Figures 7A and 7B show part of a cross-section through the ventilation unit of figure 1 with the mounting handle in the free position and the mounted position, respectively.
Figure 8 shows part of a cross-section through the drive unit of figures 3A and 3B.
Figures 9A and 9B show the inside of the upper shell and lower shell, respectively, of the volute housing of the drive unit.
Figure 10 shows a top view of the drive unit of figures 3A and 3B.
Figures 11A through 11H show cross-sections through figure 10 along the lines A-H.
Figure 12 shows a top view of the drive unit of figures 3A and 3B.
Figures 13A and 13B show a perspective view from different angles of the cross-section along line I in figure 12.
Figure 14 shows a top view of the drive unit of figures 3A and 3B.
Figure 15 shows the cross-section along line J in figure 14.
Figure 16 shows a top view of the drive unit of figures 3A and 3B.
Figure 17 shows the cross-section along line K in figure 16.
Figure 18 shows a perspective view of the lower shell of the volute housing with the centrifugal fan mounted thereon.
Figure 19 shows a graph of the surface area of the flow area versus the angular position along the volute housing for a drive unit according to the invention (solid line) compared to the same surface area for two different known drive units (dashed lines).
Figure 20 shows a graph of the height/width ratio of the flow area versus the angular position along the volute housing for a drive unit according to the invention (solid line) compared to the same ratio for two different known drive units (dashed lines).
Figure 21 shows a numerical simulation of the flow in a volute housing that is not according to the invention.
Figure 22 shows a numerical simulation of the flow in a volute housing according to the third aspect of the present invention.
Figure 23 shows a numerical simulation of the flow in a volute housing without an axial flow guide.
Figure 24 shows a numerical simulation of the flow in a volute housing with an axial flow guide.

### Embodiments of the invention

The present invention will hereafter be described with respect to particular embodiments and with reference to certain drawings, but the invention is not limited thereto and is defined only by the claims. The drawings shown here are merely schematic depictions and are non-limiting. In the drawings, the dimensions of certain parts may be exaggerated, meaning that the parts in question are not drawn to scale, being for illustrative purposes only. The dimensions and the relative dimensions do not necessarily correspond to the actual reductions to practice of the invention.

Furthermore, terms such as "first", "second", "third" and the like are used in the description and in the claims for distinguishing between similar elements, and not necessarily for describing a sequential or chronological order. The terms in question are interchangeable under the appropriate circumstances and the embodiments of the invention can operate in other sequences than described or illustrated here.

Moreover, terms such as "top", "bottom", "over", "under" and the like are used in the description and the claims for descriptive purposes. The terms so used are interchangeable under the appropriate circumstances, and the embodiments of the invention can operate in other orientations than those described or illustrated herein.

The term "comprising" and derivative terms, as used in the claims, should not be interpreted as being restricted to the means listed respectively thereafter; the term does not exclude other elements or steps. It should be interpreted as specifying the stated features, integers, steps or components as referred to, without, however, precluding the presence or addition of one or more additional features, integers, steps or components, or groups thereof. Thus, the scope of an expression such as "a device comprising means A and B" is not limited to devices consisting only of components A and B. What is meant, on the contrary, is that with respect to the present invention, the only relevant components of the device are A and B.

The term "substantially" comprises variations of +/- 10% or less, preferably +/-5% or less, more preferably +/-1% or less, and even more preferably +/-0.1% or less, from the specified condition, insofar as the variations are applicable to function in the present invention. It should be understood that the term "substantially A" is intended to also comprise "A".

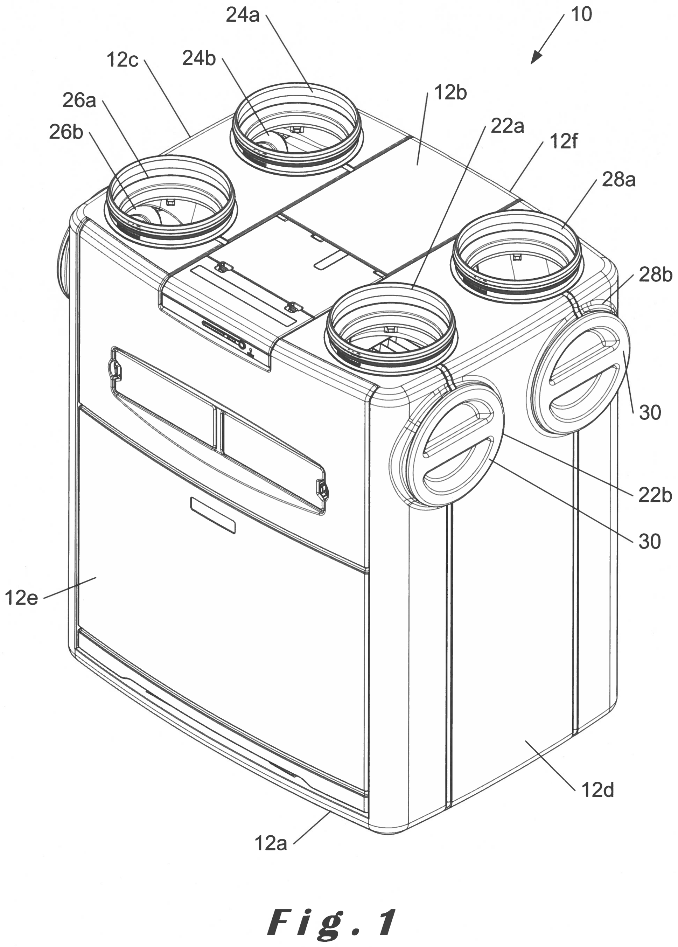

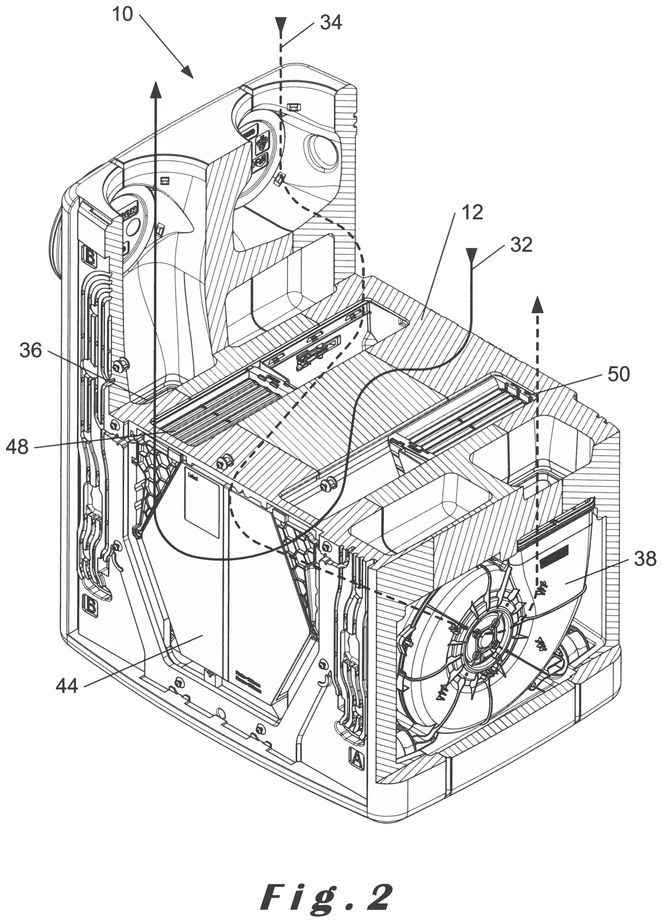

Figure 1 shows a perspective view of a ventilation unit 10 according to the present invention. The ventilation unit 10 will be generally described with reference to figures 1 and 2. In use, the ventilation unit 10 is attached to a wall in a residential building. More specifically, the ventilation unit 10 is intended to be mounted with its rear wall 12f against a wall of the residential building. In that case, the bottom wall 12a is directed towards a floor of the building so that the ventilation unit 10 is in the vertical position (as shown in figure 1).

In the embodiment shown, the housing 12 is manufactured from expanded polypropylene (EPP). However, other insulating materials, such as expanded polystyrene (EPS), are also possible. To reduce the weight, avoid costs, simplify the design, etc., no additional metal frame is provided. In other words, the housing 12 is preferably substantially entirely manufactured from insulating materials, in particular plastic, such as EPP or EPS. Moreover, the use of insulating plastic allows the housing to be manufactured wholly or partially via injection molding.

The heat exchanger 10 further comprises an electronic control module (not shown). The electronic control module serves for control and monitoring of the ventilation unit 10 and typically also contains input and output means that allow settings to be adjusted according to the wishes of a user. The electronic control module comprises the necessary hardware (e.g. a memory, a processor, display, communication means, etc.) and/or software to perform the desired functionality. Inside the housing 12, the necessary means (e.g. cables) are also provided to connect the electronic control module with the internal components of the ventilation unit 10.

In the embodiment shown, the housing comprises eight openings in the side walls 12b, 12c, 12d which may or not be sealed with a removable seal 30. The various openings include: a first inlet opening 22a, a second inlet opening 22b, a third inlet opening 24a, a fourth inlet opening 24b, a first outlet opening 26a, a second outlet opening 26b, a third outlet opening 28a, and a fourth outlet opening 28b. In the embodiment shown, openings 22b, 24b, 26b, 28b are closed by a removable seal 30. The inlet openings 22a, 22b together form a first inlet 22; the inlet openings 24a, 24b together form a second inlet 24; the outlet openings 26a, 26b together form a first outlet 26; and the outlet openings 28a, 28b together form a second outlet 28.

Providing two openings per inlet/outlet is a simple way to connect multiple ducts to the ventilation unit 10 without needing separate nodes. Moreover, because both openings of an inlet/outlet are mutually perpendicular, the placement of ducts in the technical room of the residential building is simplified. These can, for example, be placed in mutually perpendicular directions. In other embodiments, it is possible to provide only one opening per inlet/outlet in the housing 12.

In one embodiment, inlet 22 is intended as an inlet for outside air; inlet 24 is intended as an inlet for inside air (i.e. air from an indoor space of a residential building); outlet 26 is intended as an outlet to an indoor space of a residential building; and outlet 28 is intended as an outlet to the outside environment. This functionality is reversible (i.e. a reversal of the functionality of inlets 22, 24 on the one hand and a reversal of the functionality of outlets 26, 28 on the other hand) if so desired and can, for example, be adjustable by means of the electronic control module. In certain embodiments, it is also possible to swap the functionality of inlets and outlets (e.g. openings 22a, 22b serving as an outlet instead of openings 26a, 26b). This may also be adjustable by means of the electronic control module.

In the embodiment shown, two flow paths run through the ventilation unit 10, extending between the inlets 22, 24 and outlets 26, 28. The flow paths 32, 34 are schematically indicated in figure 2. The first flow path 32 runs between the inlet 22 and the outlet 26 and the second flow path 34 runs between inlet 24 and outlet 28.

In the embodiment shown, the ventilation unit 10 comprises an air-to-air plate heat exchanger 44. Air-to-air plate heat exchangers are known per se and details thereof are assumed to be known by the person skilled in the art. A plurality of channels extend through the air-to-air plate heat exchanger 44, namely one channel between each two successive plates. Each channel forms part of one of the flow paths 32, 34. In the embodiment shown, the air-to-air plate heat exchanger 44 operates on the basis of a cross-flow, given the simplicity and efficiency thereof, but other operating principles are possible. In the embodiment shown, the plate heat exchanger 44 has the shape of a honeycomb. The plate heat exchanger 44 can be a heat recovery ventilation unit (HRV unit) or an energy recovery ventilation unit (ERV unit). An HRV unit and an ERV unit are known per se and details thereof are assumed to be known by the person skilled in the art.

In other embodiments, such as disclosed in WO 2023/227961 A1, use can also be made of two separate plate heat exchangers arranged in a parallel configuration. In that case, there is preferably one HRV and one ERV unit. In such a parallel configuration of the air-to-air plate heat exchangers 44, the first flow path 32 comprises a first parallel part that runs through the first air-to-air plate heat exchanger and a second parallel part that runs through the second air-to-air plate heat exchanger, and the same goes for the second flow path 34 with a first parallel part through the first air-to-air plate heat exchanger and a second parallel part through the second air-to-air plate heat exchanger.

In the embodiment shown, the ventilation unit 10 further comprises a first valve 48 and a second valve 50. The first valve 48 is placed on the first flow path 32 at the inlet side of the air-to-air plate heat exchanger 44. The second valve 50 is placed on the second flow path 34 at the inlet side of the air-to-air plate heat exchanger 44. In the embodiment shown, the valves 48, 50 are located on their respective flow path 32, 34 before the air-to-air plate heat exchanger 44. This typically results in a better flow and/or fewer pressure problems compared to valves behind the air-to-air plate heat exchangers.

The ventilation unit 10 further typically comprises a first filter unit (not shown) and a second filter unit (not shown). Depending on the configuration of the ventilation unit 10, the first filter unit serves to filter fresh air (i.e. air flowing from the outside environment to the residential building) and the second filter unit serves to filter outgoing air. A reverse configuration is also possible. The use of two filter units simplifies the installation because, even if the ventilation unit 10 were to be connected incorrectly with respect to the inlet or outlet, each air flow passes a filter unit. Both filter units can, depending on the filter used, prevent dust and/or other particles, such as bacteria, viruses, smoke and the like, from entering the residential building. Each filter unit is located on a respective flow path 32, 34.

Figure 2 shows a number of the internal components of the ventilation unit 10. The ventilation unit 10 comprises a first drive unit 36 and a second drive unit 38. The first drive unit 36 is located on the first flow path 32 and the second drive unit 38 is located on the second flow path 34. Each drive unit 36, 38 serves for driving an air flow over its respective flow path 32, 34. As shown in figure 2, the drive units 36, 38 are arranged on opposite sides of the heat exchanger 44. In the embodiment shown, the drive units 36, 38 are placed rotationally symmetrically with respect to a 180° rotation around the vertical direction. Both drive units 36, 38 are preferably identical. This reduces the need for storing parts and simplifies assembly of the ventilation unit 10. One of the drive units 36, 38 will be described in detail below.

The electronic control module is preferably configured for independently controlling each of the valves 48, 50, the drive units 36, 38 (e.g. the fan speed) and/or other components (e.g. flow regulators). The electronic control module typically comprises a processor that sends control signals to the components to be controlled. The electronic control module may also comprise a memory on which, for example, a list of preset configurations and the corresponding control signals are stored. The electronic control module can also be in communication with one or more external sensors (not shown), e.g. a thermometer, a carbon dioxide meter, a hygrometer, a pressure meter, etc. These sensors can measure the outside air and/or the air inside (a room in) the residential building. Based on the information obtained and/or external input from the user, the electronic control module can send out the necessary control signals.

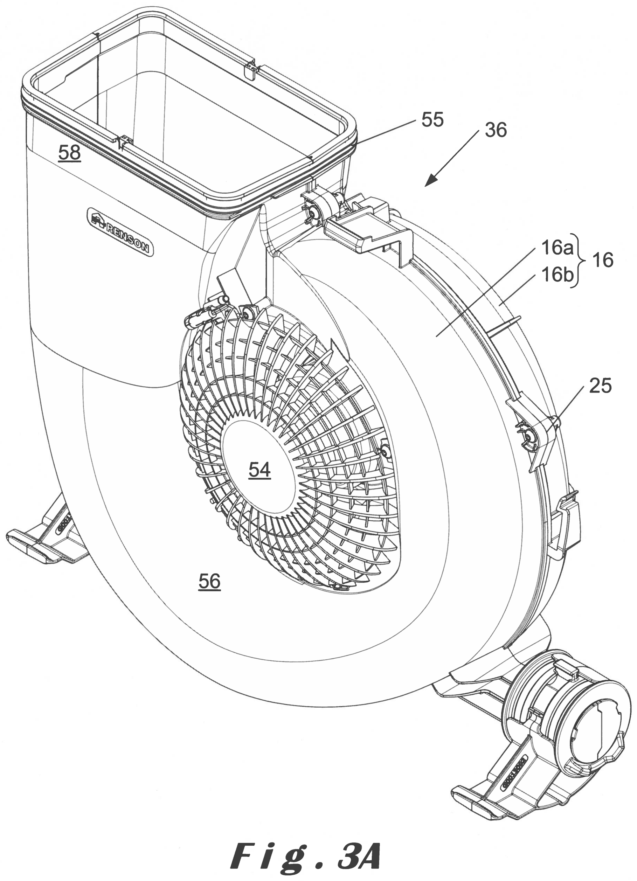

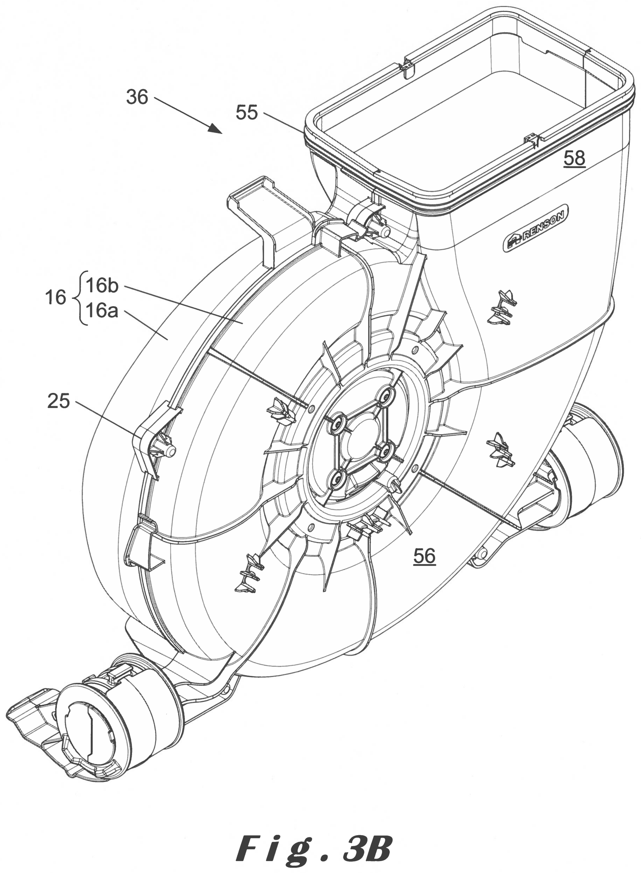

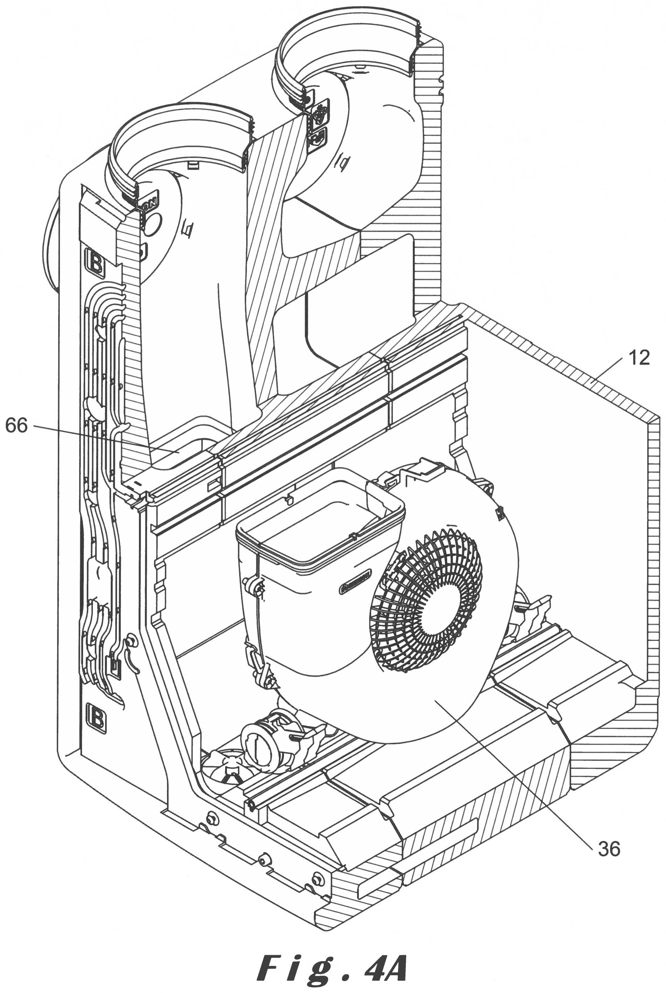

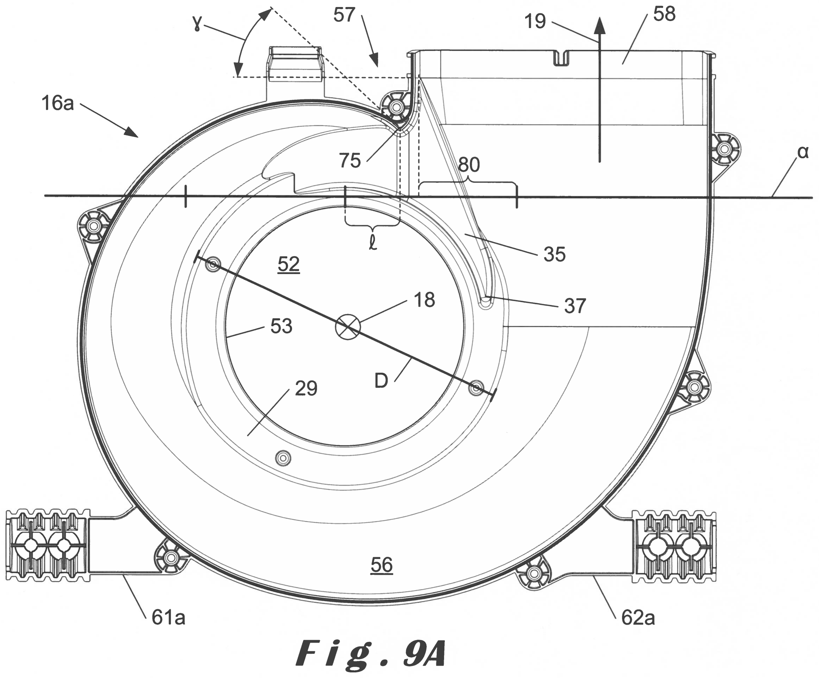

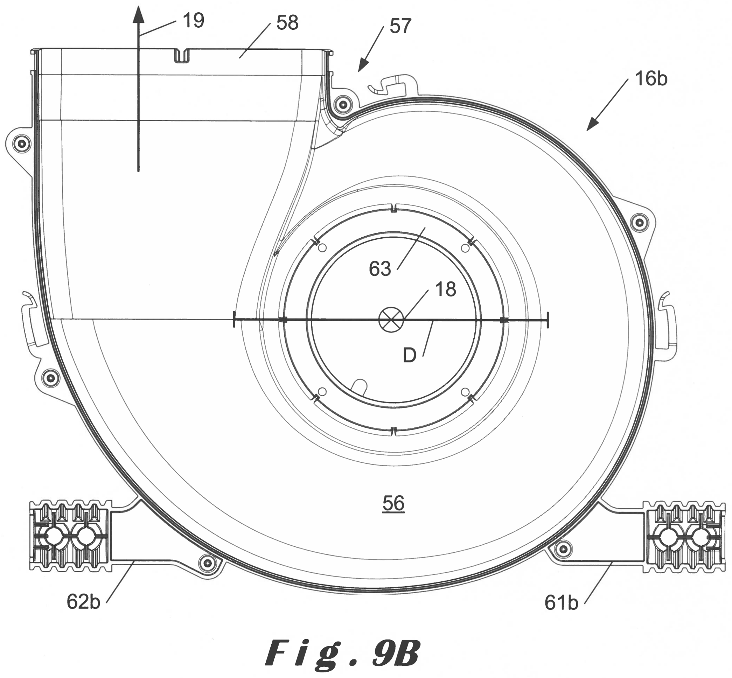

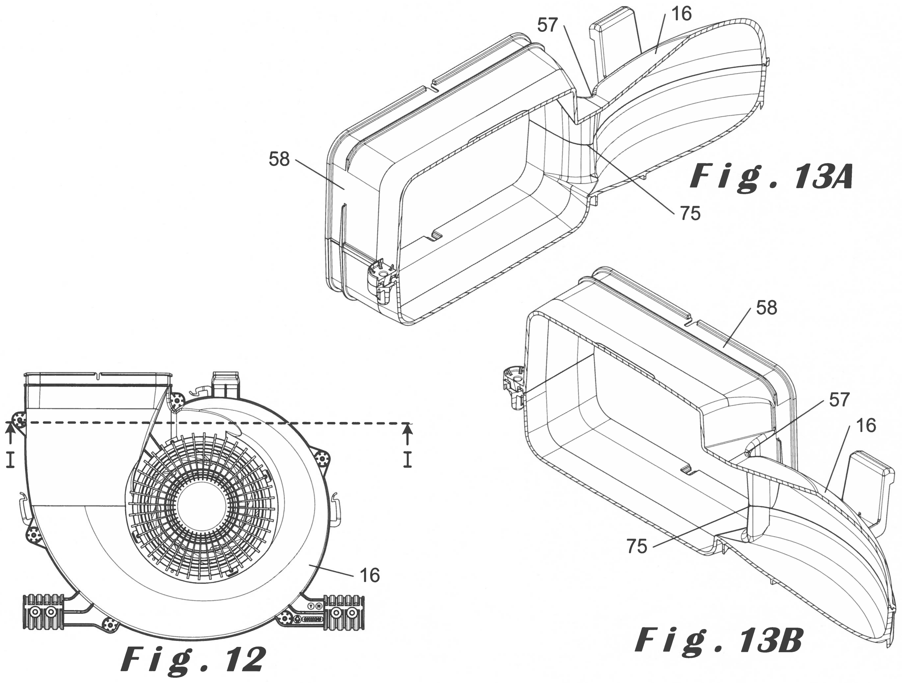

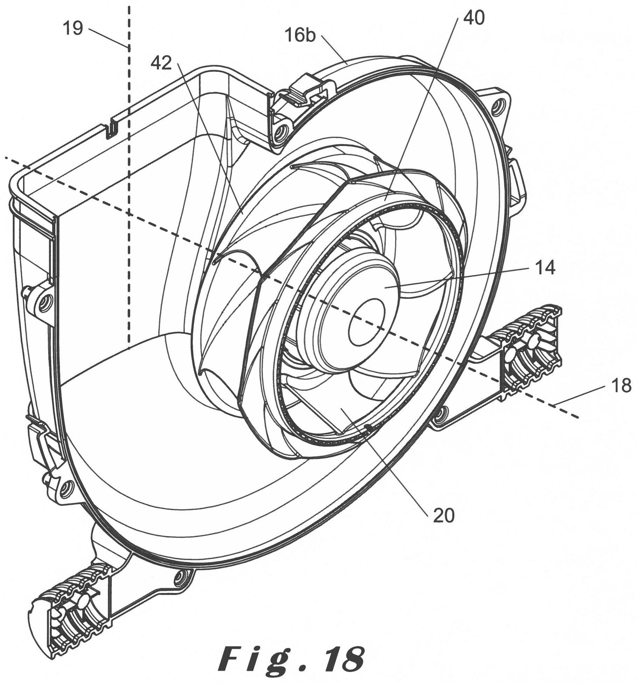

The core of the present invention lies in the design of the drive unit and comprises three central aspects: the mounting of the drive unit described below with reference to figures 4A-8; the design of the circumferential part of the volute housing described below with reference to figures 9-11H; and the design of the end part and narrowest part of the volute housing described below with reference to figures 12-17. Figures 3A, 3B and 18 show a number of more general aspects of the drive unit 36.

As shown in figure 18, each drive unit 36, 38 comprises a centrifugal fan 14 which is mounted in a volute housing 16 (also known as a scroll housing). The volute housing 16 allows the centrifugal fan 14 to generate a higher air pressure. In the context of the invention, the centrifugal fan 14 is typically a backward curved centrifugal fan. Only in the aspect concerning the mounting is the type of centrifugal fan not essential. The centrifugal fan 14 has a central axis of rotation 18 that determines an axial direction. Multiple fan blades 20 are arranged between an upper ring 40 and a lower ring 42. These elements 20, 40, 42 can be integrally manufactured. The fan blades 20 are typically equally distributed over the entire circumference of the rings 40, 42.

In one embodiment, each drive unit 36, 38 can move an air volume between 50 and 700 m³/h and in particular between 300 and 650 m³/h.

The volute housing 16 typically has two shells, namely an upper shell 16a and a lower shell 16b. The inside of the upper shell 16a is shown in figure 9A and the inside of the lower shell 16b is shown in figure 9B. Each shell 16a, 16b is preferably integrally manufactured, for example in an injection molding process. The person skilled in the art is familiar with suitable thermoplastic materials for manufacturing the shells 16a, 16b. In the upper shell 16a, an axial suction opening 52 (indicated in figure 9A) is provided which serves as an air inlet. A flow guide 54 is preferably arranged around the axial suction opening 52. Flow guides are known, e.g. from WO 2015/124237 A1 and EP 3 287 642 A1, and can optimize the incoming air flow. As shown in figure 18, in the embodiment shown, the centrifugal fan 14 is attached to the lower shell 16b. Both shells 16a, 16b are attached to each other by means of conventional fastening means 25 as shown in figures 3A and 3B.

The volute housing 16 is generally shown in figures 3A and 3B and is provided with: a suction opening 52, a spiral part 56 that extends around the suction opening 52; and a mouth 58. The mouth 58 determines an outflow direction 19 (indicated in figure 18) which is typically perpendicular to the axis of rotation 18 of the centrifugal fan 14. In the embodiment shown, the mouth 58 has a substantially rectangular cross-section which, as described further, is advantageous for the air flow. However, except for the aspect concerning the design of the end part and narrowest part of the volute housing, the design of the mouth is not essential.

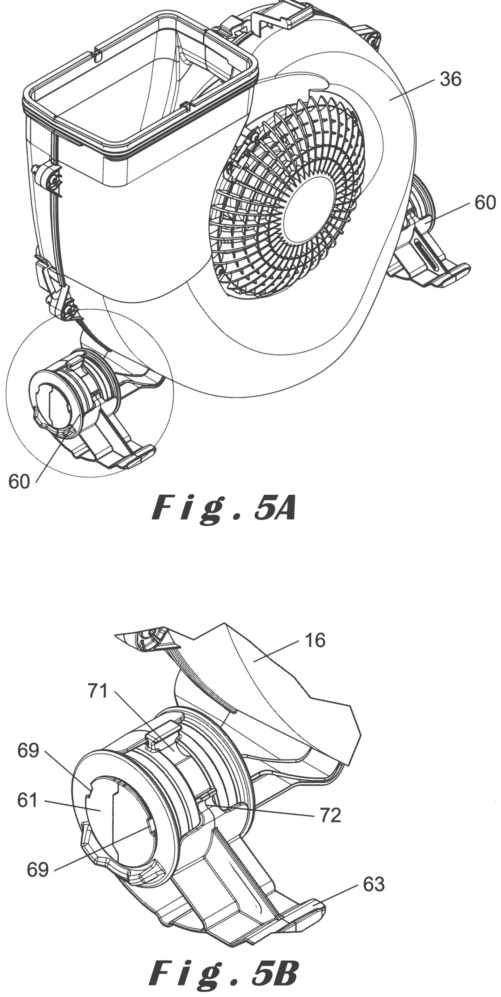

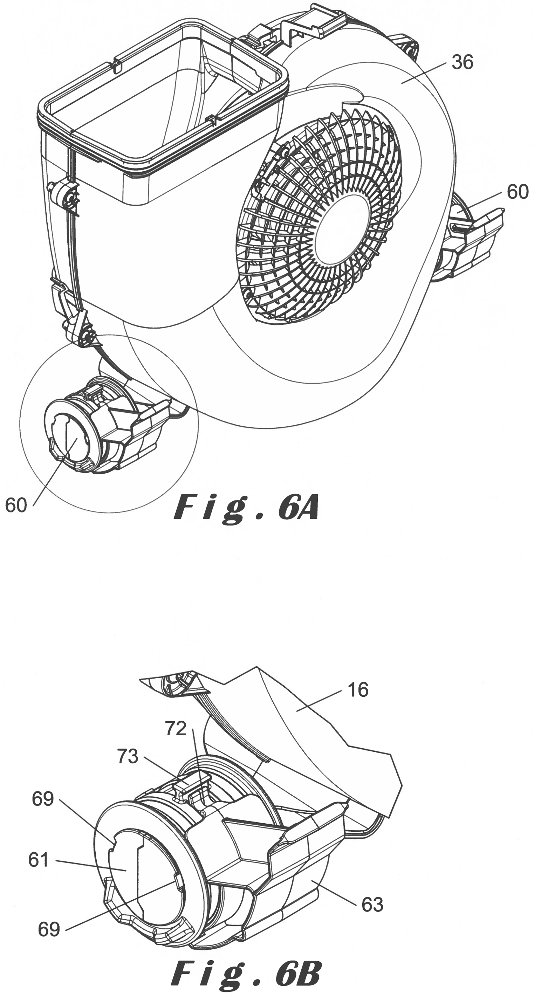

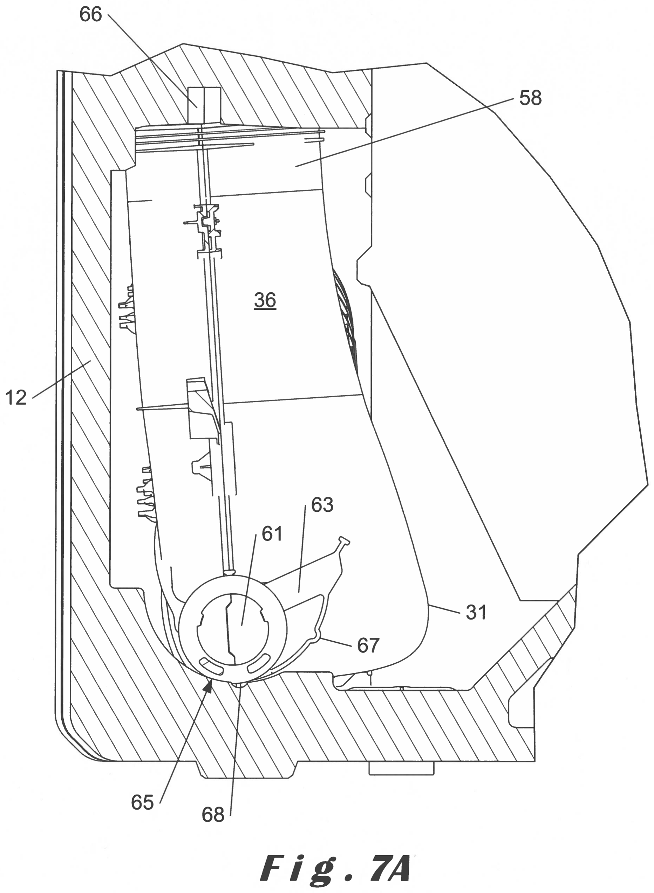

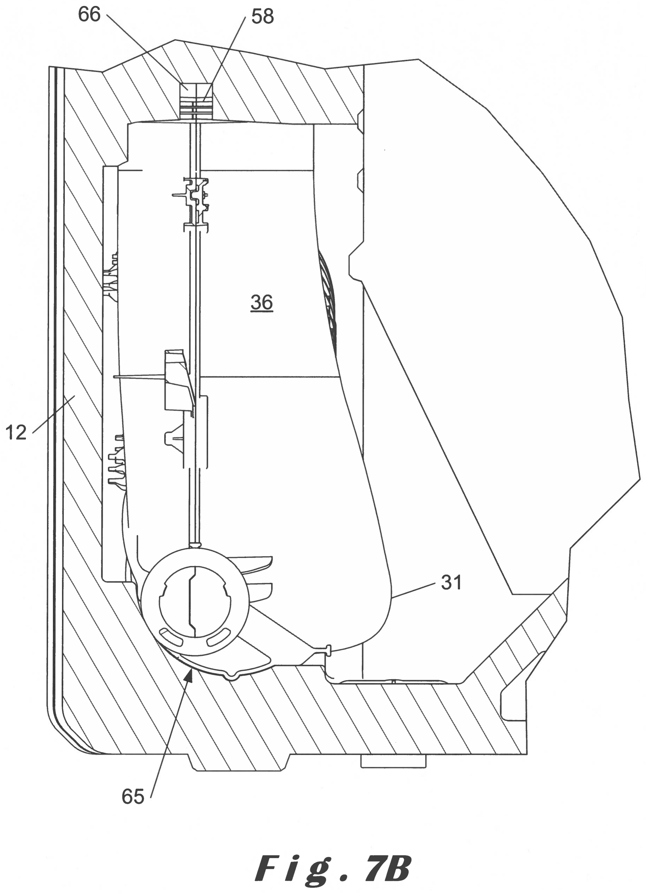

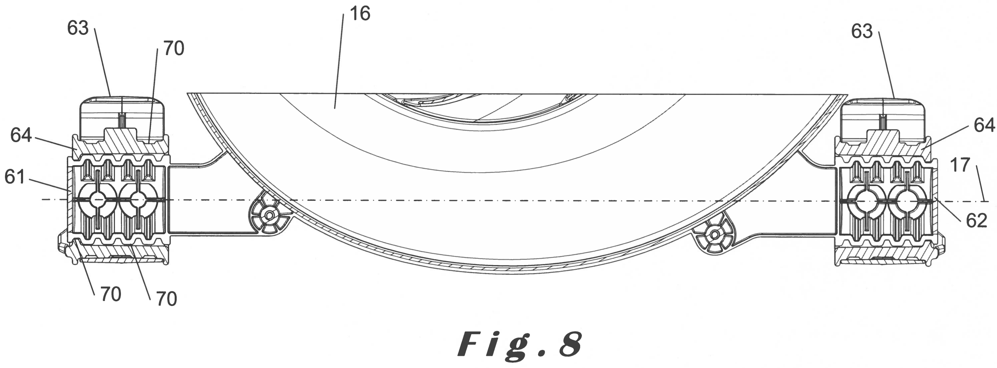

In a first aspect, the invention relates to a fastening mechanism 60 for fastening the drive unit 36 to the housing 12. Details of the fastening mechanism 60 are shown in figures 5B, 6B and 8. The fastening mechanism 60 comprises two shafts 61, 62 that are in line with each other on the outside of the volute housing 16. As shown in figure 8, these shafts 61, 62 together define an axis of rotation 17. On each shaft 61, 62, a handle 63 is mounted. This handle 63 is rotatable around the axis of rotation 17 between a free position (shown in figure 6B) and a mounted position (shown in figure 5B). A handle guide 65 corresponding to the handles 63 is provided on the inside of the housing 12 as shown in figures 7A and 7B. The handles 63 and handle guides 65 together act as a lever so that a rotation of the handles 63 from their free position (shown in figure 7A) to their mounted position (shown in figure 7B) results in a translation of the drive unit 36 with respect to the housing 12. This is clear when comparing figures 7A and 7B where the mouth 58 has been shifted upwards into the mounting slot 66 provided in the housing 12. Through these elements, the drive unit 36 is then fastened to the housing 12.

For the smoothest possible operation, the contact surfaces of the handle 62 and handle guides 65 are smooth. As best shown in figures 7A and 7B, the handle 63 comprises a ridge 67 and the handle guide 65 comprises a corresponding groove 68. In the mounted position, the ridge 67 fits into the groove 68 to thereby contribute to the correct placement of the drive unit 36.

There is also a seal 55 (shown in figures 3A and 3B) fitted around the mouth 58. This seal 55 provides a substantially airtight connection between the mouth 58 and the mounting slot 66. The seal 55 also contributes to avoiding a direct mechanical coupling between the drive unit 36 and the housing 12.

In the embodiment shown, a damping ring 64 is also fitted between the handle 63 and the shaft 61, 62. This damping ring 64 is shown in figure 8 and primarily provides for a damping of vibrations of the drive unit 36. In the embodiment shown, the shafts 61, 62 are provided on their outside with two grooves 69 that ensure that this outer surface is not circular. The damping ring 64 has corresponding ribs so that only one unique positioning of the damping ring 64 with respect to the shafts 61, 62 is possible. As shown in figure 8, various rib structures 70 are also present on the shafts 61, 62, the damping ring 64, and the handle 63. These rib structures 70 extend around the axis of rotation 17 and contribute to the correct mutual placement of these elements.

The handles 63 are preferably bistable between the free position and the mounted position. In the embodiment shown, this is achieved by a resilient arm 72 on the handle 63 and two cavities 71 in the damping ring 64. The arm 72 engages in a cavity 71 and thus prevents further rotation of the handle 63. An additional stop 73 is also provided on the damping ring 64 to prevent unwanted rotation of the handle 63. It should be clear that these cavities 71 and/or the stop 73 could also be provided directly on the shafts 61, 62 if no damping ring 64 were present.

In the embodiment shown, each shaft 61, 62 is formed by two shaft parts, namely a first shaft part 61a, 62a on the upper shell 16a and a second shaft part 61b, 62b on the lower shell 16b. This is best shown in figures 9A and 9B.

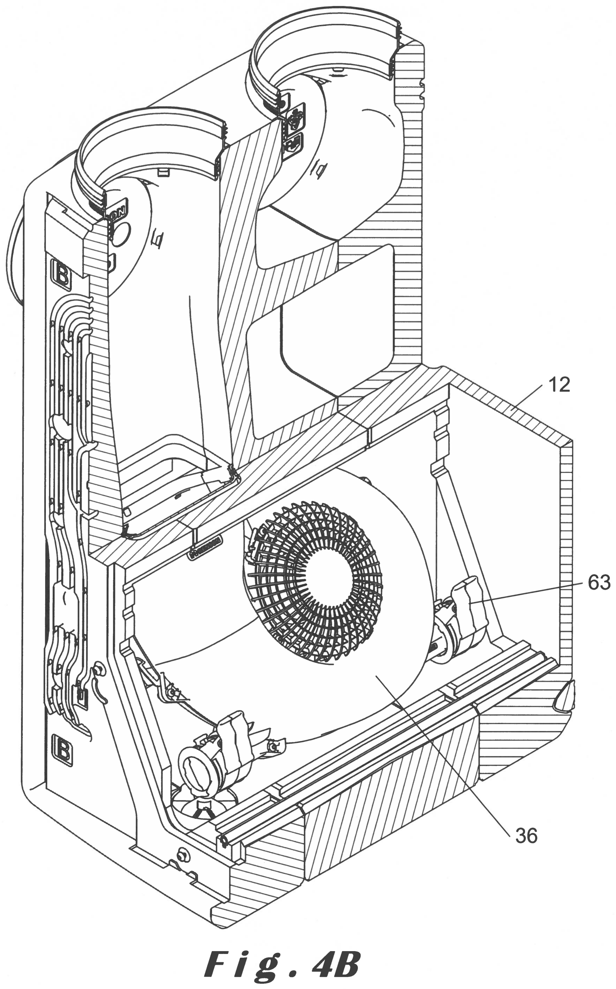

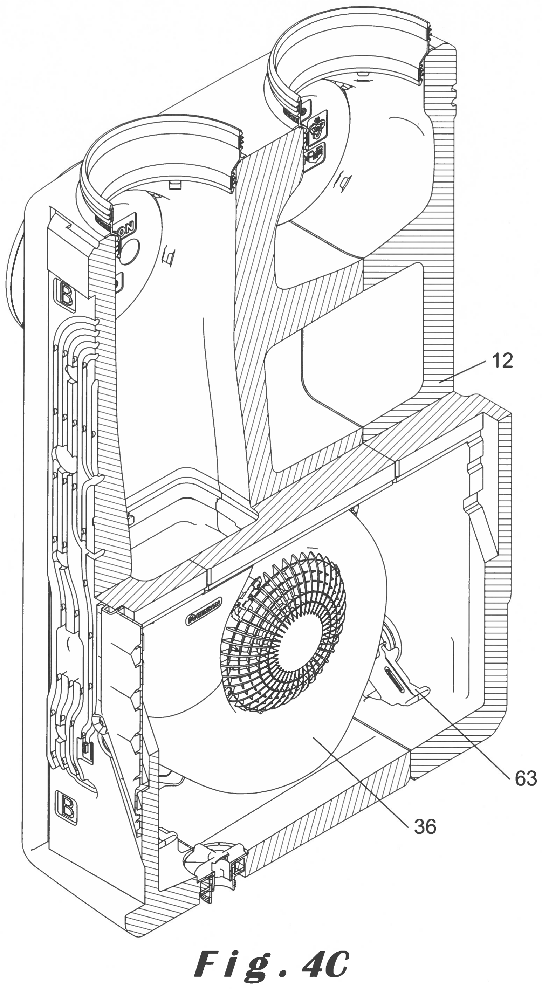

The placement of the drive unit 36 in the housing 12 is shown in figures 4A through 4C. In figure 4A, the drive unit 36 is inserted into the housing 12. This is done, for example, via the front wall 12e. There is sufficient space for this as no heat exchanger 44 is yet present. Subsequently, the drive unit 36 is tilted as shown in figure 4B to be able to place the mouth 58 below the mounting slot 66. It is crucial here that the handles 63 are still in the free position. Once the mouth 58 is located below the mounting slot 66, the handles 63 are rotated (as shown in figure 4C) so that the mouth 58 slides into the mounting slot 66. The handles 63 thereby lock onto the handle guides 65 as shown in figure 7B, so as to fasten the drive unit 36.

From figures 4A-4C, it is also apparent that it is advantageous to provide the shafts 61, 62 opposite the mouth 58. This location is easily accessible if no heat exchanger 44 is yet present. It is also convenient that the axis of rotation 17 is perpendicular to the plane defined by axes 18, 19. This is so that the handle guides 65 are at the same height inside the housing and to more easily convert the rotation of the handles 63 into a displacement of the drive unit 36.

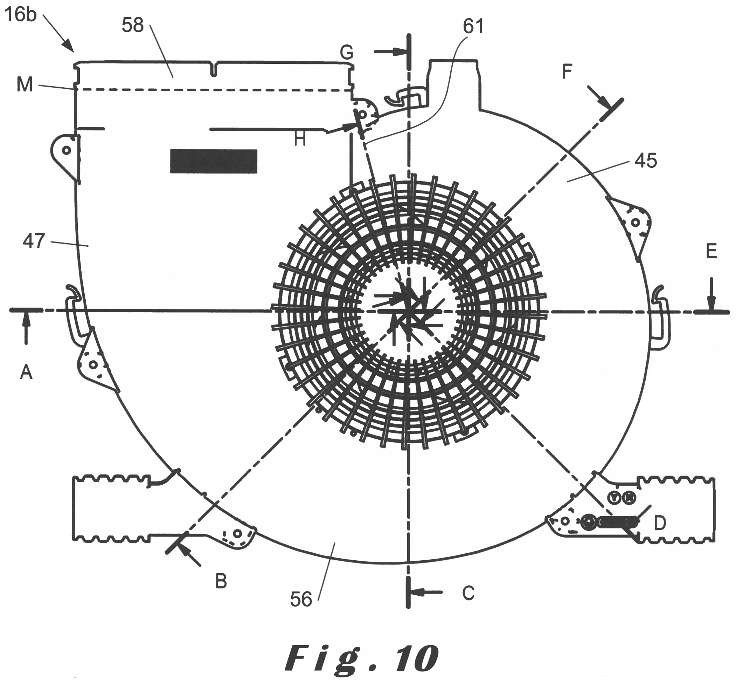

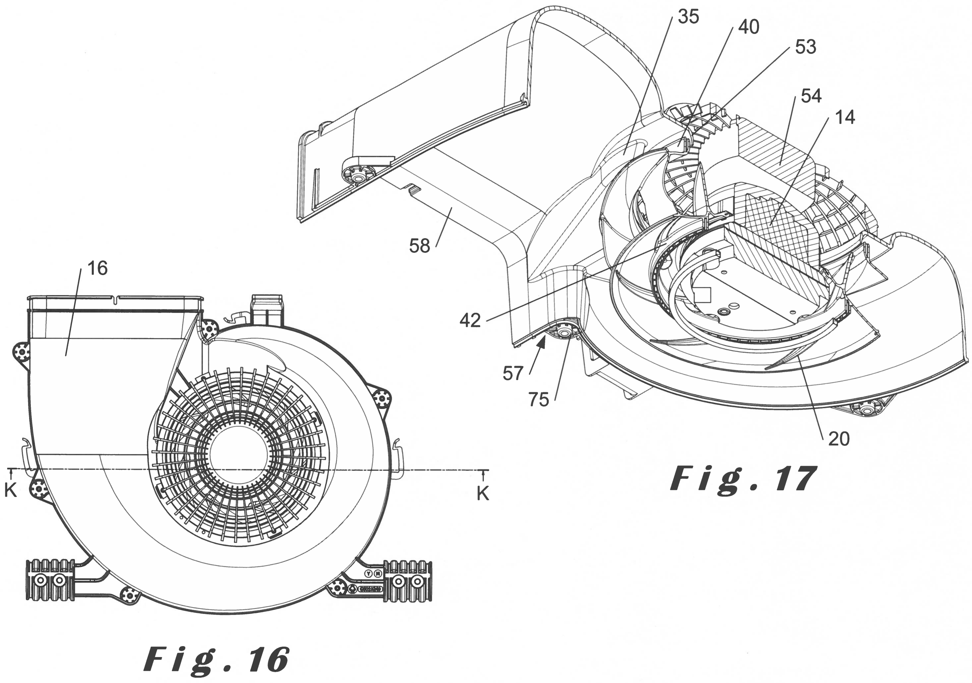

In a second aspect, the invention relates to the internal design of the volute housing 16. To that end, the inside of each shell 16a, 16b is shown in figures 9A and 9B. The volute housing 16 generally comprises:
- A mouth 58 that is the outlet for an air flow from the volute housing 16. This mouth has an outflow direction 19.
- A central axis of rotation 18 around which the centrifugal fan 14 rotates. This axis of rotation 18 determines an axial direction that is perpendicular to the outflow direction 19.
- A central mounting part 63 for fastening the centrifugal fan 14. This mounting part 63 is annular and is provided on the lower shell 16b. Alternatively (or additionally), the centrifugal fan 14 can also be attached to the central plane inside the annular mounting part 63 of the lower shell 16b.
- An axial suction opening 52 in the upper shell 16a which is delimited by a peripheral edge 53. This peripheral edge 53 can be bent inwards as shown in figure 17.
- Around the central portion of the volute housing 16, a spiral part 56 is present. For the remainder of the description, we divide the spiral part 56 into different zones which are indicated in figure 10.
- The spiral part 56 begins with a narrowest part 61 that is formed by a constriction 57. This is the line H indicated in figure 10.
- From the narrowest part 61 onward, the circumferential part 45 extends over an angle of at least 250°. This is the area between lines A and H in figure 10, which extends over an angle of 290° in figure 10.
- At line A, the circumferential part 45 transitions into the end part 47 which connects to the mouth 58 at line M. The specific location of line A can be uniquely defined as the plane perpendicular to the outflow direction 19 through the axis of rotation 18.

Since the design of the volute housing 16 is optimized for, and thus dependent on, the centrifugal fan 14, it is useful to use a dimension of that centrifugal fan 14 as a reference value.

On figures 9A and 9B, an indication is also given of the diameter D of the smallest circumscribed hypothetical cylinder around the centrifugal fan 14. This smallest circumscribed hypothetical cylinder has an axis that coincides with the axis of rotation 17 and a diameter D which is indicated in figures 9A and 9B. In one embodiment, this diameter is between 150 mm and 250 mm, for example 160 mm, 170 mm, 180 mm, 190 mm, 200 mm, 210 mm, 220 mm, 230 mm or 240 mm.

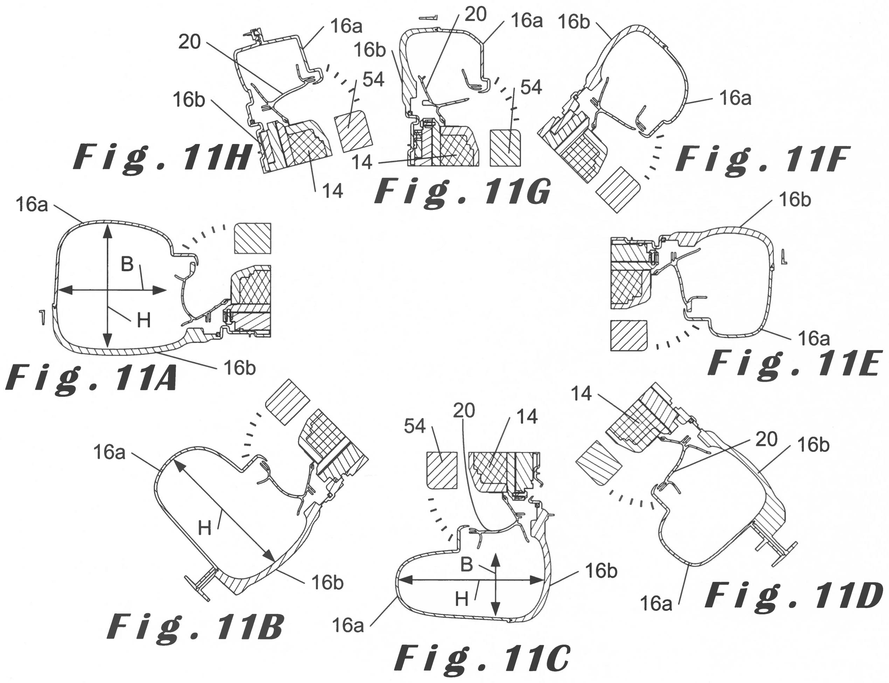

The flow area in the circumferential part 45 is shown by means of the cross-sections A-G in figures 11A-11G. The flow area is bounded on the inside by the smallest circumscribed hypothetical cylinder and on the outside by the wall of the circumferential part 45. The width B of the flow area is indicated in figures 11A and 11C and is defined as the longest distance perpendicular to the axis of rotation 18 between the hypothetical smallest circumscribed cylinder and the inner wall of the circumferential part 45. The height H of the flow area is indicated in figures 11A-11C and is defined as the longest distance parallel to the axis of rotation 18 between the upper and lower shells 16a, 16b.

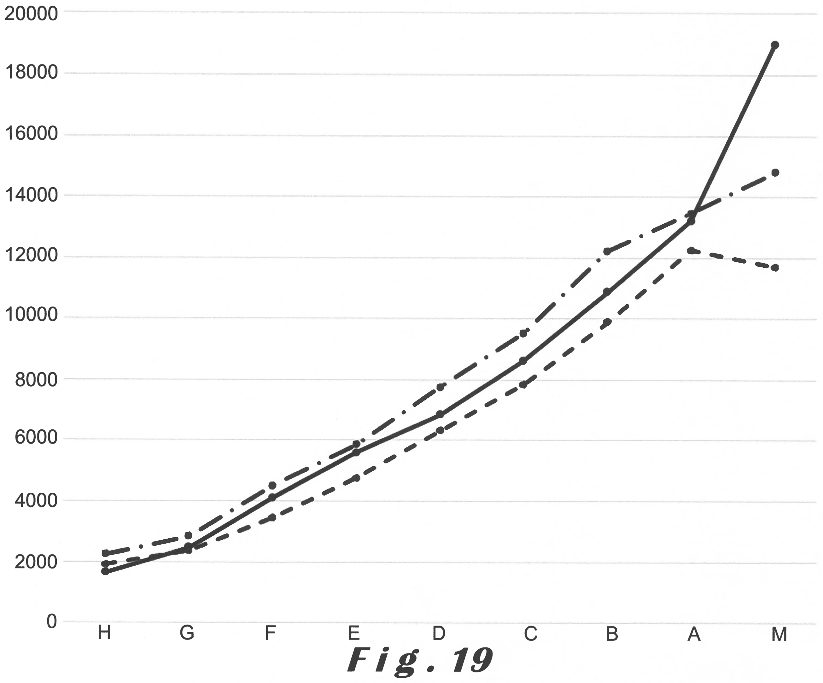

Figure 19 shows the evolution of the surface area (expressed in mm²) of the flow area along the circumferential part in planes H-A as well as in the mouth M. The figure shows this for the volute housing 16 as shown in figures 9A and 9B (solid line) as well as for two reference models that correspond to currently commercially available products (dashed lines).

A characteristic feature is that the present volute housing 16, as well as the already known ones, have a strictly monotonic increase of the surface area of the flow area through the entire circumferential part 45 (i.e. from H through A). In the present design, this surface area increases even further over the end part 47 (i.e. in the region A-M) up to the mouth 58.

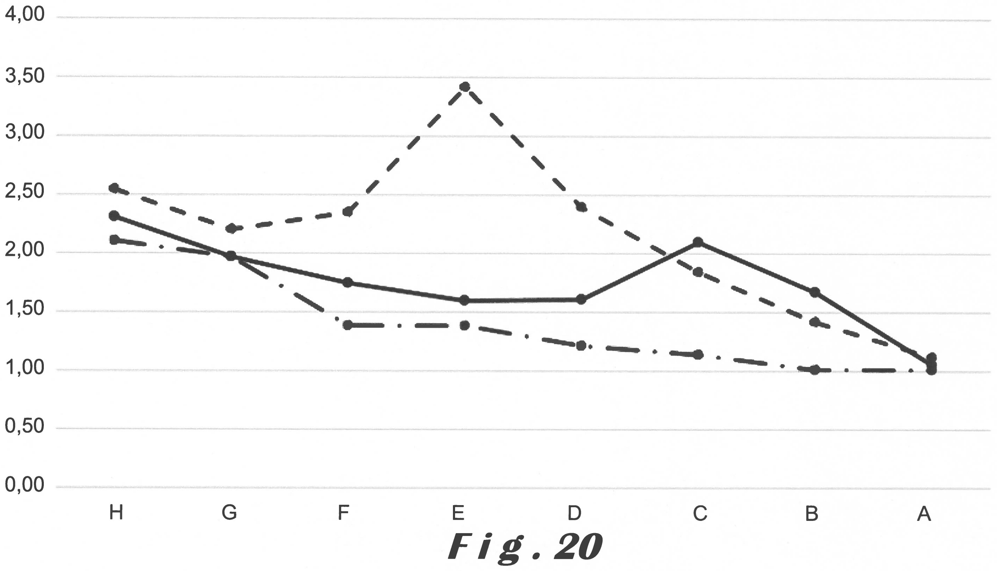

Essential to this aspect of the invention is the height/width ratio of the flow area. This evolution is shown in figure 20, again for the volute housing of figures 9A-9B (in solid line) and the same two reference models that correspond to currently commercially available products (dashed lines). In the present aspect, it is essential that the height/width ratio has a local maximum in the angular region B-D. As can be seen in figure 10, this angular region is located at an angle of between 45° and 135° with respect to plane A. As already described, this results in a more compact drive unit 36 without significantly impacting the flow rate.

This local maximum is, in the embodiment shown, caused by an increase in the height H (which in this way reaches an absolute maximum that is higher than the height of the mouth 58) and the width B remaining substantially constant. This is clearly visible in the cross-sections 11A-11E. It is also visible in the other views of the drive unit, e.g. figures 7A and 7B, where a bulge 31 is visible on the side of the drive unit 36. In the embodiment shown, this bulge 31 is directed towards the heat exchanger 44 since there is sufficient space there (as shown in figure 2) due to the honeycomb shape of the heat exchanger 44.

From figure 20, it can also be deduced that the peak of the local maximum deviates only 0.34 from the average value of the height/width ratio. Higher values up to at most 0.75 are possible. Above that (as with one of the reference models), however, there is a separation of the air flow from the volute housing 16, which is detrimental to the flow.

In figure 9A, an additional annular mounting part 29 is also provided. This mounting part 29 serves for fastening the flow guide 54 around the suction opening 52. The mounting part 29 also forms part of the central portion of the volute housing 16.

As already described above, a pressure sensor and/or a temperature sensor can be fitted on the circumferential part 45 of the volute housing 16, in particular on the outside thereof, in an angular region that extends between 0° and 60° relative to the transition between the narrowest part and the circumferential part, i.e. between planes H-F indicated in figure 10.

In a third aspect, the invention relates to the placement of the mouth 58 and an advantageous design of the end part 47 and the narrowest part 61. Essential to the third aspect is the use of a rectangular mouth 58 (as in the illustrated embodiments) and the existence of an overlap 80 between the mouth and the smallest circumscribed hypothetical cylinder around the centrifugal fan 14. This overlap 80 is indicated in figure 9A by projecting both the mouth 58 and the smallest circumscribed hypothetical cylinder perpendicularly onto a hypothetical plane α (which plane is perpendicular to the outflow direction 19). In the embodiment shown, this overlap amounts to about 27% of the projected surface area of the smallest circumscribed hypothetical cylinder, but it can generally vary between 15% and 50%. This surface area can be calculated by dividing the length of line segment 80 by the diameter D.

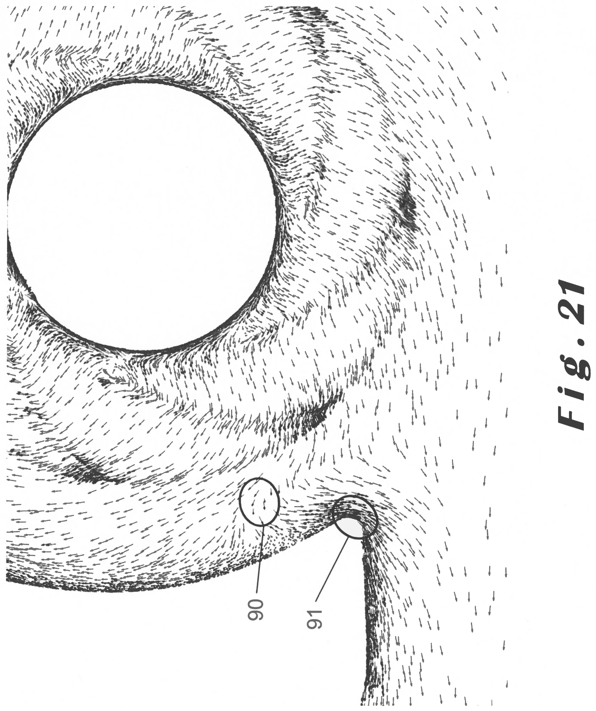

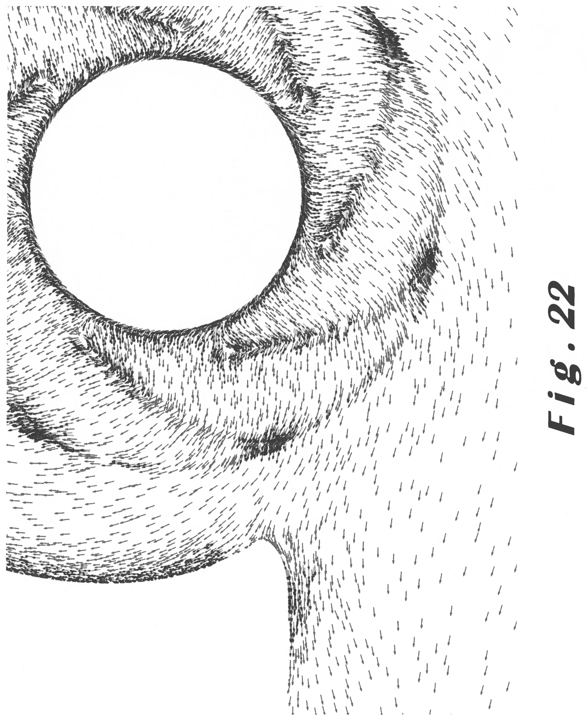

As is apparent from numerical simulations which have been added as figures 21 and 22, this optimizes the air flow. More specifically, figure 21 shows the flow path obtained by a simulation of a centrally placed centrifugal fan that has no overlap with the mouth, while figure 22 shows a same simulated flow path with a shifted centrifugal fan. In figure 21, a dead zone 90 as well as an accumulation 91 (i.e. a pressure increase) are present. In figure 22, such a dead zone is not present and the pressure increase near the constriction is also significantly lower.

In the simulation of figure 22, not only the placement of the centrifugal fan 14 has been adjusted, but also the design of the constriction 57 that determines the narrowest part of the spiral part 56 of the volute housing 16. The design of this constriction 57 is shown in perspective view in figures 13A and 13B and in a top view in figures 9A and 9B. The constriction 57 has a tip 75 which, as best shown in figures 9A and 9B, is bent away from the mouth 58 towards the axis of rotation 17 (viewed in the hypothetical plane α). This improves the flow compared to a non-bent tip (as in figure 21). This is because the bend allows the beginning of the circumferential part 45 to be oriented so that it is substantially tangential to the air flow. The angle γ between this wall part and the plane perpendicular to the outflow direction 19 is approximately 45° in the embodiment shown, but can generally vary between 35° and 60°, such as 40°, 43°, 48°, 50° or 55°.

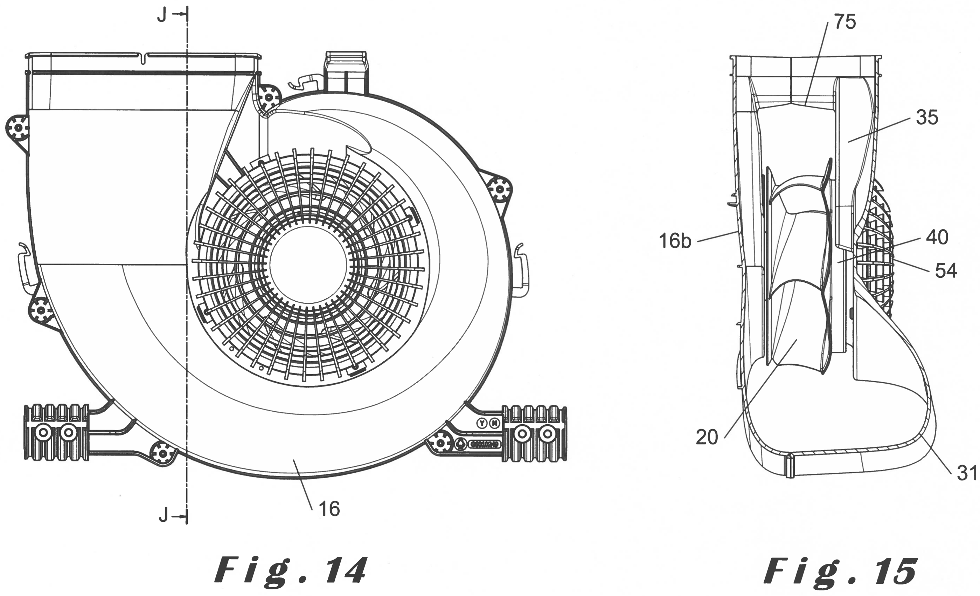

In the embodiment shown, the constriction 57 is uniform in the axial direction 18. This is shown in figures 13A and 13B, where it can be seen that the design of the constriction 57 hardly varies in height. The only variation is a slight slope to make it easier to manufacture each shell 16a, 16b by means of injection molding, as is clearly visible in figure 15. Figures 13A-13B also show that the constriction 57 extends along the entire axial wall between the top and bottom of the volute housing 16. The entire area in which the fan blades 20 are located is thus bounded by the constriction 57.

The tip 75 of the constriction 57 in the embodiment shown is a sharp angle of about 85°. In theory, an even sharper angle would be better as a flow splitter. However, this then further restricts the surface area of the narrowest part 61, which is detrimental to the flow rate.

In the embodiment shown, the tip 75 has a radius of curvature of approximately 4.5 mm near the bottom wall and the top wall and approximately 2.5 mm near the central plane of the volute housing 16 (i.e. where the shells 16a, 16b meet). However, the radius of curvature can be larger, up to 8 mm in the central plane. In the embodiment shown, the distance 1 between the axis of rotation 18 and a projection of the tip 75 onto the hypothetical plane α is approximately 33%, but this can generally be between 20% and 55%, such as for example 25%, 30%, 35%, 40%, 45% or 50%.

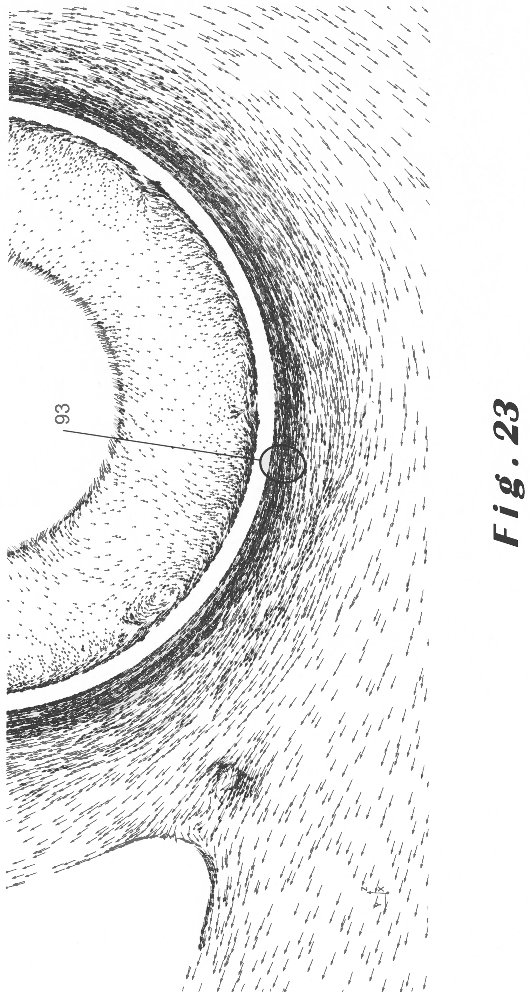

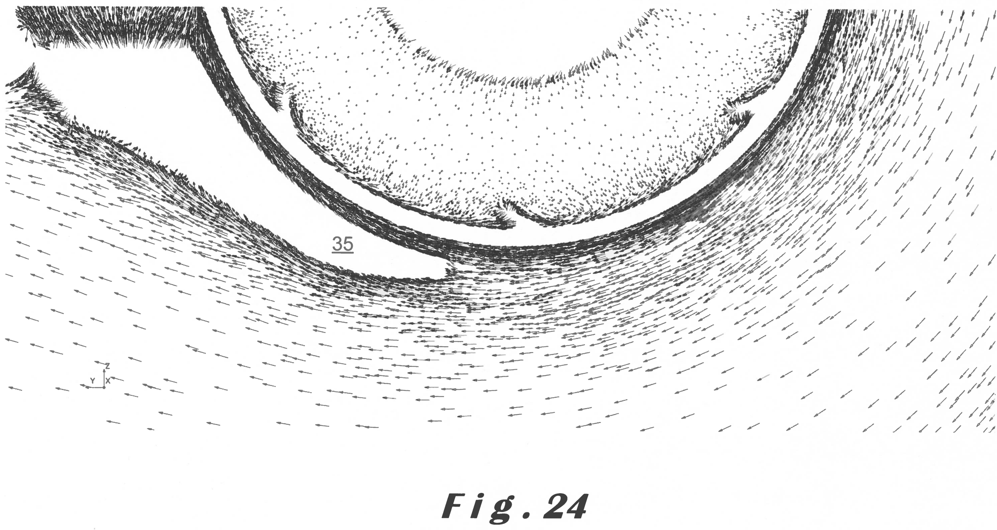

A further important element is the presence of an axially raised flow guide 35 on the inside of the upper shell 16a in the end part 47 of the volute housing 16. As shown in figure 9A, this axially raised flow guide 35 is substantially wedge-shaped with a tip 37 that is bent towards the centrifugal fan 14. The effect of this axially raised flow guide 35 is clear from the comparative simulation in figures 23 and 24. In figure 23, no such axially raised flow guide 35 is present, so that a significant part of the flow remains stuck to the centrifugal fan 14 (see accumulation in region 93). In figure 24, such an axially raised flow guide 35 is present, so that the air flow splits and a larger part is diverted to the mouth 58.

As shown in figure 15, the axially raised flow guide 35 is intended to deflect the air flow near the upper shell 16a towards the mouth 58. This is because there is a free space between the blades 20 of the backward curved centrifugal fan 14 and the shell 16a. At the lower shell 16b, such an axially raised flow guide is not useful because the blades 20 come much closer to the volute housing 16 there.

In the embodiment shown, for example in figure 9A, the inner wall of the axially raised flow guide 35 is substantially parallel to the centrifugal fan 14. This is also clear in the simulation of figure 24.

The axially raised flow guide 35 and the constriction 57 are also shown together in figure 17. Figure 17 also clearly shows, as does figure 15, that the axially raised flow guide 35 extends in the axial direction 18 from the upper shell 16a towards the lower shell 16b along the upper ring 40 of the centrifugal fan 14. As shown in figure 9A, the axially raised flow guide 35 extends over substantially the entire length of the end part 47. In the embodiment shown, this is over 92% of the length of the end part 47 (which length is measured parallel to the outflow direction 19 up to plane A indicated in figure 10). However, the axially raised flow guide 35 may also be shorter, with a length of at least 80% of the end part 47. The idea is that the axially raised flow guide 35 extends as far as possible away from the mouth to near the zone where the air flow needs to be guided to the mouth 58.

Although certain aspects of the present invention have been described with respect to specific embodiments, it is clear that these aspects can be implemented in other forms within the scope of protection as defined by the claims.

## Claims

1. A ventilation unit (10) for a residential building, said ventilation unit comprising:
- a housing (12) in which a first inlet (22), a second inlet (24), a first outlet (26), and a second outlet (28) are provided, wherein the first inlet and the first outlet together form part of a first flow path (32) and wherein the second inlet and the second outlet together form part of a second flow path (34);
- an air-to-air plate heat exchanger (44) positioned inside the housing and provided with a plurality of first channels that form part of the first flow path and a plurality of second channels that form part of the second flow path; and
- a first drive unit (36) positioned inside the housing and arranged for driving an air flow over the first flow path and a second drive unit (38) positioned inside the housing and arranged for driving an air flow over the second flow path, wherein each drive unit comprises a backward curved centrifugal fan (14) inside a volute housing (16),
wherein each centrifugal fan has an axis of rotation (18) and a hypothetical smallest circumscribed cylinder and wherein each volute housing is provided with:
- a mouth (58) defining an outflow direction (19) that is perpendicular to the axis of rotation;
- an end part (47) that connects to the mouth;
- a narrowest part (61); and
- a circumferential part (45) that extends around the axis of rotation from the narrowest part of the volute housing over an angle of at least 250° to the end part of the volute housing, wherein a normal to a cross-section containing the axis of rotation, at the boundary where the circumferential part transitions into the end part, coincides with the outflow direction, wherein each volute housing defines a flow area that varies along the circumferential part, which flow area, in a cross-section containing the axis of rotation, is delimited by the hypothetical smallest circumscribed cylinder and the inner wall of the circumferential part,
wherein a width of the flow area, in a cross-section containing the axis of rotation, is determined by a longest distance perpendicular to the axis of rotation between the hypothetical smallest circumscribed cylinder and the inner wall of the circumferential part, and
wherein a height of the flow area, in a cross-section containing the axis of rotation, is determined by a longest distance parallel to the axis of rotation between two locations on the inner wall of the circumferential part,
**characterized in that** a surface area of the flow area increases monotonically from the narrowest part up to the end part over the circumferential part, **in that** a ratio of the height of the flow area to the width of the flow area has a local maximum in an angular region that extends between 45° and 135° relative to the transition between the end part and the circumferential part, and **in that** said local maximum is formed by a bulge (31) on the circumferential part, which bulge is directed towards the air-to-air plate heat exchanger.

2. The ventilation unit according to claim 1, **characterized in that** the value of said local maximum is at most 0.75 higher than an average of the ratio of the height of the flow area to the width of the flow area over the entire circumferential part.

3. The ventilation unit according to claim 1 or 2, **characterized in that** the ratio of the height of the flow area to the width of the flow area over the entire circumferential part globally decreases from the narrowest part to the end part.

4. The ventilation unit according to any one of the preceding claims, **characterized in that** the width of the flow area in a portion of said angular region is substantially constant, wherein said portion extends over an angle of at least 30°,
wherein, preferably, said portion extends over an angle of between 80° and 135° relative to the transition between the end part and the circumferential part.

5. The ventilation unit according to any one of the preceding claims, **characterized in that** the height of the flow area has an absolute maximum in said angular region, which absolute maximum is preferably in a portion that extends over an angle of between 60° and 120° relative to the transition between the end part and the circumferential part.

6. The ventilation unit according to any one of the preceding claims, **characterized in that** the width of the flow area increases monotonically from the narrowest part up to the end part over the circumferential part.

7. The ventilation unit according to any one of the preceding claims, **characterized in that** the mouth has a substantially rectangular cross-section.

8. The ventilation unit according to claim 7, **characterized in that** the substantially rectangular cross-section has a height and **in that** the height of the flow area has an absolute maximum in the circumferential part, wherein the absolute maximum is greater than the height of the substantially rectangular cross-section.

9. The ventilation unit according to any one of the preceding claims, **characterized in that** a pressure sensor and/or a temperature sensor is provided on the circumferential part of the volute housing in an angular region that extends between 0° and 60° relative to the transition between the narrowest part and the circumferential part.

10. The ventilation unit according to any one of the preceding claims, **characterized in that** the volute housing is provided with an axial suction opening (52) around which the narrowest part, the circumferential part and the end part extend,
wherein, preferably, a flow guide (54) is provided in the suction opening.

11. The ventilation unit according to any one of the preceding claims, **characterized in that:**
- the surface area of the flow area increases strictly monotonically from the narrowest part up to the end part over the circumferential part; and/or
- the surface area of the flow area further increases over the end part, wherein the surface area reaches an absolute maximum at the mouth.

12. The ventilation unit according to any one of the preceding claims, **characterized in that** the air-to-air plate heat exchanger operates on the basis of a cross-flow.

13. A residential dwelling comprising the ventilation unit according to any one of the preceding claims.
